# EUROPÄISCHE PATENTSCHRIFT

(11) **EP 1 219 068 B1**
(45) Veröffentlichungstag und Bekanntmachung des Hinweises auf die Patenterteilung: **26.12.2007**
(21) Anmeldenummer: 00956424.6
(22) Anmeldetag: 10.08.2000
(51) Int. Cl.: H04L 12/28

(54) **HAUS-KOMMUNIKATIONSSYSTEM, TRANSPORTPLATTFORM FÜR EIN HAUS-KOMMUNIKATIONSSYSTEM UND INTELLIGENTES NETZABSCHLUSSGERÄT FÜR EIN HAUS-KOMMUNIKATIONSSYSTEM**
HOME INTERCOM SYSTEM, TRANSPORT PLATFORM FOR AN INTERCOM SYSTEM AND AN INTELLIGENT MAINS RECEIVER FOR A HOME INTERCOM SYSTEM
SYSTEME DE COMMUNICATION INTERNE, PLATE-FORME DE TRANSPORT DESTINEE A UN SYSTEME DE COMMUNICATION INTERNE ET APPAREIL DE RACCORDEMENT AU RESEAU INTELLIGENT DESTINE A UN SYSTEME DE COMMUNICATION INTERNE

(30) Priorität: 13.08.1999 DE 19938354
(43) Veröffentlichungstag der Anmeldung: 03.07.2002
(73) Patentinhaber: Fraunhofer-Gesellschaft zur Förderung der angewandten Forschung e.V., 80686 München (DE)
(72) Erfinder: ZELLER, Markus, D-86420 Diedorf (DE); HEIDRICH, Mike, D-80993 München (DE); STEFFEN, Rainer, D-80796 München (DE)
(74) Vertreter: Schoppe, Fritz
(86) Internationale Anmeldenummer: PCT/EP2000/007799
(87) Internationale Veröffentlichungsnummer: WO 2001/013575

(56) Entgegenhaltungen:
- EP-A- 0 837 579
- WO-A-99/17477
- US-A- 5 452 291
- US-A- 5 886 732
- US-A- 5 933 427
- KATO M ET AL: "VISUAL COMMUNICATION SYSTEM IN AN APARTMENT HOUSE USING ONLY TWISTED PAIRED CABLE" Juni 1994 (1994-06) , IEEE TRANSACTIONS ON CONSUMER ELECTRONICS,US,IEEE INC. NEW YORK, VOL. 40, NR. 3, PAGE(S) 418-426 XP000471202 ISSN: 0098-3063 das ganze Dokument
- SUMIO FUJIE ET AL: "CONSTRUCTION ASPECTS OF INTELLIGENT BUILDINGS" April 1991 (1991-04) , IEEE COMMUNICATIONS MAGAZINE,US,IEEE SERVICE CENTER. PISCATAWAY, N.J, VOL. 29, NR. 4, PAGE(S) 50-57 XP000228275 ISSN: 0163-6804 Abbildung 12
- NEGUS K J ET AL: "HOME RF TM AND SWAP: WIRELESS NETWORKING FOR THE CONNECTED HOME" Oktober 1998 (1998-10) , MOBILE COMPUTING AND COMMUNICATIONS REVIEW,US,ACM, NEW YORK, NY, VOL. 2, NR. 4, PAGE(S) 28-36 XP000786057 das ganze Dokument

## Beschreibung

Die vorliegende Erfindung bezieht sich auf Kommunikationssysteme für ein Haus, für eine Wohnung oder ein Büro in einem Haus oder für einen zusammengehörigen verteilten Gebäudekomplex und insbesondere auf ein Kommunikationssystem, mit dem die verschiedensten in einem Haus einsetzbaren Kommunikationsgeräte über einen einzigen Datenbus kommunizieren können.

Allgemein existiert derzeit folgendes Szenario. In einem Hochhaus befinden sich beispielsweise 10 Wohnungen und/oder Büros. Das Hochhaus umfaßt ferner eine Zentralheizung und eine Wind/Sonnendetektionsanlage, um zumindest in den oberen Stockwerken bei entsprechende Sonneneinstrahlung Jalousien zu schließen bzw. bei zu starkem Wind die Jalousien wieder zu öffnen. Das Haus umfaßt ferner einen Aufzug sowie unter Umständen eine Videokamera zum Überwachen des Eingangsbereichs, eine Notruffunktion, um den Wachdienst des Hauses zu alarmieren und einen Empfang, an dem man sich von einer Empfangsdame oder einem Empfangsherrn Informationen über die in dem Haus ansässigen Firmen einholen kann. In jedem der Büros in dem Hochhaus befindet sich ein Rechnernetz und eine Telephonanlage. Sowohl die Rechnernetze in den Büros als auch die Bewohner in den Privatwohnungen in dem Hochhaus verfügen zumindest teilweise über einen Internet-Zugang und über diverse Multimedia-Konsumer-Geräte. Schließlich könnte noch eine eigene Haustelephonanlage sowie, falls es sich bei den Unternehmen um verbundene Unternehmen handelt, eine Audiound/Videoanlage vorhanden sein, um Audio- und/oder Videodaten im Haus zu verteilen.

Von der Installationsseite her gesehen existieren für dieses Haus mehrere voneinander getrennte Kommunikationssysteme bzw. Kabelbäume im Kabelschacht des Hauses. Das erste Kommunikationssystem ist das Telephonsystem. Üblicherweise hat jedes Büro seine eigene ISDN-Vermittlungsanlage.

Ein weiteres Kommunikationsnetz ist vorgesehen, um die Wind/Sonnen-Steuerung der Jalousien sowie weitere Hausdienste, wie z. B. die Heizungserfassung und die darauf ansprechende Heizungssteuerung, durchzuführen. Ein weiteres eigenes Kommunikationssystem für das Haus ist die Türsprechanlage bzw. die Türöffnungsanlage. Den Informationsdienst am Empfang nimmt eine Dame oder ein Herr wahr, die oder der dann mittels einer erweiterten Türsprechanlage bei der entsprechenden Firma bzw. bei dem entsprechenden Privatier Bescheid sagt, daß Besuch naht. Für die Videoerfassung des Eingangsbereichs, welche üblicherweise von jedem Büro bzw. jeder Wohnung durchführbar sein sollte, dürfte ein eigenes Kabelnetz vorhanden sein, da das Netz für die Türsprechanlage typischerweise viel zu schmalbandig ist, um Audio- und/oder Videodaten zu übertragen. Falls dieses Netz für die Videoüberwachung breitbandig genug ausgewählt ist, könnte das hauseigene Broadcast/Videonetz in dieses Netz integriert sein. Ansonsten wird auch hierfür ein eigenes breitbandiges Broadcast- oder Multicast-Netz erforderlich sein.

Üblicherweise kann vom äußeren Kommunikationsnetz, welches derzeit überwiegend ein ISDN-Netz ist, lediglich auf die in dem Haus vorhandenen ISDN-Vermittlungsstationen zugegriffen werden, jedoch nicht auf die anderen in dem Haus befindlichen oben dargelegten Kommunikationsnetze.

Nachteilig an dem beschriebenen Szenario ist die Tatsache, daß eine Vielzahl von eigenen meist voneinander getrennten Kommunikationssystemen im Haus eine Vielzahl von Kabelbäumen im Kabelschacht erfordert. Diese Kabelbäume sind, wenn daran gedacht wird, daß ein System getrennt von dem anderen installiert wird, irgendwann sehr unübersichtlich, insbesondere wenn Mieter häufig gewechselt haben und dadurch Veränderungen vorgenommen wurden. Dann existiert eigentlich niemand mehr, der einen Überblick über die im Haus befindlichen Kabelbäume und deren Zugehörigkeit zu den Kommunikationssystemen hat.

Ein weiterer Nachteil besteht darin, daß praktisch keine Möglichkeit vorhanden ist, daß die einzelnen Netze untereinander auf geordnete Art und Weise zusammenarbeiten, was auch als Interworking bezeichnet wird, sondern daß alle Netze voneinander getrennt ihren Dienst verrichten. Dies erfordert wieder weitere sehr aufwendige und teuere Installationen im Haus, wenn beispielsweise die Heizung bzw. andere Hausdienste oder aber der Aufzug in dem Haus nicht lokal von einem dort ansässigen Hausmeister sondern zentral datenmäßig gesteuert bzw. gewartet werden sollen.

Ein weiterer Nachteil des beschriebenen Szenarios besteht darin, daß für viele voneinander getrennte Anwendungen prinzipiell dieselben Endgeräte vorhanden sind. Beispielsweise befindet sich in jedem Büro eine Vielzahl von in der Funktion ähnlichen Telephonen, z. B. für die Telephonanlage des Büros und zusätzlich für die Türsprechanlage.

Neben seiner Inflexibilität und Unübersichtlichkeit ist das beschriebene Szenario ferner dadurch gekennzeichnet, daß es insgesamt sehr teuer ist, da eine Vielzahl von eigentlich gleich arbeitenden Endgeräten vorhanden ist, wie es ausgeführt worden ist, und da besonders wenn an größere Gebäude gedacht wird, eine Vielzahl von Kabeln vorhanden ist, welche aufgrund ihres eigenen Materialwerts und darüberhinaus aufgrund der Kosten für die Verlegung ebenfalls preislich beträchtlich ins Gewicht fallen können.

Die DE 196 34 778 A1 offenbart eine Telephonanlage mit Videokamera, welche über eine Zentraleinrichtung mit einem Dienste-integrierenden digitalen Netz (ISDN) verbunden ist. Die Einrichtung beinhaltet eine Audioeinheit zur Ankopplung einer Türsprechanlage an das digitale Netz, eine Videoeinheit zur Ankopplung der Videosignale der Videokamera an das digitale Netz, eine Steuereinheit zur Übertragung eines Anforderungssignals zum Aufbau einer Wählverbindung zur Übertragung der Video- und Audiosignale über das digitale Netz im Falle einer Betätigung der Türsprechanlage sowie zum Empfang von Steuersignalen und zur Übertragung der Steuersignale ohne Unterbrechung der Wählverbindung an wenigstens eine fernsteuerbare Einheit und ein ISDN-Bildtelephon mit einprogrammierter Rufumleitung.

Damit ist bereits eine Integration von Türkommunikation und Videoüberwachung des Eingangsbereichs mit einem in einem Büro vorhandenen ISDN-Netz gegeben. Nachteilig an diesem System ist jedoch die Tatsache, daß hierin keine Lösung für das Haus insgesamt gegeben ist, d. h. für sämtliche Wohnungen und/oder Büros, und daß für sämtliche anderen beschriebenen Kommunikationsnetze dennoch eigene Installationen erforderlich sind. Das ISDN-Netz ist ferner in seiner Kapazität und Funktionalität aufgrund des nicht für ein Hauskommunikationssystems entworfenen ISDN-Protokolls begrenzt.

Das U.S.-Patent Nr. 5,886,732 bezieht sich auf ein Haus-Kommunikationssystem. Das Haus-Kommunikationssystem umfaßt eine Netzschnittstelle NIU, die eine Verbindung des Haus-Kommunikationssystems mit der "Außenwelt" schaffen. Die NIU ist mit einem internen Netz verbunden. Ebenfalls mit dem Netz verbunden sind die verschiedenen Kommunikationskomponenten im Haus, wie z.B. STE-1 (Set-Top-Electronic), um Fernsehsignale zu verteilen, PC-2 (Personalcomputer), der über ein Netz mit verschiedenen Komponenten (HiFi, Dat, Drucker) verbunden sind, ein Drucker, eine weitere Set-Top-Electronic für einen analogen Fernseher sowie ein weiterer PC für ein Haus-Automatisierungs-Netz für diverse andere Hausanwendungen. Das interne Netz umfaßt als zentrales Element den Switch-Hub. Alle internen Komponenten sind sternförmig mit dem Switch-Hub verbunden. Der Switch-Hub umfaßt einen üblichen Hub und einen Direktschaltungs-Kreuzschalter. Der Switch-Hub kann direkte Schaltungsverbindungen von einer Netzschnittstelle zu einem Gerät im Haus schaffen, um große Datenmengen, wie z.B. komprimierte digitale Video- und Internet-Daten direkt von außen zu einem Empfänger im Haus zu übertragen.

Das U.S.-Patent Nr. 5,452,291 offenbart eine Vorrichtung zur Übertragung von Daten von einem ersten Gerät zu einem zweiten Gerät, wobei das erste und das zweite Gerät durch ein System mit einem ersten und einem zweiten Kommunikationsmedium verbunden ist. Das Gerät zur Übertragung von Daten, das auch als Brouter bezeichnet wird, vereinigt die Funktionen einer Bridge und eines Routers. Das Netz-Medium hat z. B. eine Ethernet-Spezifikation.

Die Aufgabe der vorliegenden Erfindung besteht darin, ein preisgünstiges Kommunikationsnetz für ein Haus, eine Wohnung oder ein Büro in einem Haus oder für einen zusammengehörigen verteilten Gebäudekomplex zu schaffen, die sich durch gute Handhabbarkeit und Transparenz einerseits und Flexibilität hinsichtlich Benutzeranforderungen und Erweiterbarkeit andererseits auszeichnet.

Diese Aufgabe wird durch ein Kommunikationsnetz nach Patentanspruch 1 gelöst.

Der vorliegenden Erfindung liegt die Erkenntnis zugrunde, daß ein einheitliches Kommunikationssystem für ein Haus nur dadurch erreicht werden kann, daß das Haus in Untergruppen aufgeteilt wird, welche beispielsweise einzelne Wohnungen oder einzelne Büros sein können. Wenn ein zusammengehöriger, jedoch verteilt angeordneter Campus-artiger Gebäudekomplex betrachtet wird, welcher zwar aus verschiedenen Gebäuden besteht, welcher aber zentral verwaltet wird, so kann auch hier eine Aufteilung in Untergruppen, beispielsweise in bestimmte Gebäudeabschnitte, stattfinden. Alternativ kann auch eine Wohnung in Untergruppen unterteilt werden, so daß beispielsweise jedes Stockwerk bzw. jeder Raum eine eigene für sich gesehene Untergruppe bildet.

Die Architektur des erfindungsgemäßen Kommunikationssystems besteht nun darin, für jede Untergruppe welche auch als End-Einheit bezeichnet werden kann, ein eigenes Netzabschlußgerät bereitzustellen, mit dem sämtliche in der End-Einheit oder Untergruppe vorhandenen Kommunikationsgeräte über entsprechende im Netzabschlußgerät vorhandene Schnittstellen verbindbar sind.

Jedes Netzabschlußgerät ist über eine eigene Schnittstelleneinrichtung mit dem pyhsikalischen Datenbus verbunden, welcher z. B. als abgeschirmte verdrillte Zweidrahtleitung, als nicht-abgeschirmte verdrillte Zweidrahtleitung, als Glasfaserleitung oder als ein anderes geeignetes Medium ausgeführt sein kann.

Für den Datenbus ist ein Datenübertragungsprotokoll vorhanden, das keine deterministische Zugriffssteuerung enthält. Anders ausgedrückt ist das Übertragungsprotokoll des Datenbusses derart ausgestaltet, daß der Datenbus als Shared-Medium verwendet wird, derart, daß jeder Teilnehmer auf den Datenbus ohne Rücksicht auf die anderen Teilnehmer zugreifen kann, und daß, falls aufgrund der begrenzten Datenübertragungskapazität keine ausreichende Kapazität vorhanden ist, Daten verloren gehen würden, bzw. nicht mehr gemäß ihren Anforderungen übertragen werden können.

Die Schnittstelleneinrichtung, die jedem Netzabschlußgerät zugeordnet ist, ist erfindungsgemäß als QoS-Schnittstelle (QoS = Quality Of Service = Dienstqualität) ausgestaltet, derart, daß der Zugriff der Netzabschlußgeräte und damit der Zugriff der mit den Netzabschlußgeräten verbundenen Kommunikationsgeräte nicht ungesteuert auf dem Datenbus stattfindet, sondern so stattfindet, daß eine faire Zuteilung von Bandbreite an die einzelnen Teilnehmer ohne Datenverluste auftreten kann und somit Anwendungsanforderungen eingehalten werden.

Diese Zuteilung geschieht vorzugsweise so, daß mit Netzabschlußgeräten verbundene Kommunikationsgeräte, welche Sprach-Daten oder Videodaten senden oder empfangen, gegenüber Kommunikationsgeräten, welche lediglich eine Datenübertragung bewirken, bevorzugt werden. So ist es unerheblich, ob Daten zur Haussteuerung bezüglich der Zentralheizung oder der Jalousien eine große Verzögerung erhalten, während eine solche größere Verzögerung oder Delay für Telephon- oder Videoanwendungen nicht tolerierbar sein dürfte.

Es wird bevorzugt, daß die Netzabschlußgeräte derart ausgestaltet sind, daß sie ein Interworking, d. h. ein Zusammenarbeiten, der mit denselben verbundenen verschiedenen Kommunikationsgeräte in einer End-Einheit, z. B. einem Büro, ermöglichen, ohne den zentralen Datenbus im Haus mit Datenübertragungen zu belasten.

Als Protokoll für den zentralen Datenbus wird aufgrund seines geringen Preises, der großen Verfügbarkeit und ferner aufgrund des geringen Preises sämtlicher dazugehöriger Komponenten das Ethernet-Protokoll gemäß dem Standard IEEE 802.3 bevorzugt. Es hat sich herausgestellt, daß die Ethernet-Transportplattform für Haus-Kommunikationssysteme aufgrund ihres geringen Preises und der Flexibilität, die sich auch in der großen Skalierbarkeit von 10 bis 1000 Mbit/s äußert, besonders geeignet ist, wenn diese Transportplattform, welche gemäß dem Standard als Shared-Medium ausgestattet ist und bei üblichen Anwendungen keine deterministische Zugriffssteuerung umfaßt, und üblicherweise sternförmig verdrahtet ist, mit einer Schnittstelleneinrichtung für jedes Netzabschlußgerät versehen wird, welche die zugriffssteuerung durchführt.

Die Einbeziehung typischer Haus-Dienste, wie z. B. die Tür- und Hauskommunikation, Sicherheitsfunktionen, Gebäudesteuerungsfunktionen, Überwachungsdienste, spezialisierte Anwendungen, wie z. B. Concierge, ist ohne weiteres möglich bzw. ohne die geringste Modifikation am Kabelschacht nachrüstbar.

Es wird bevorzugt, ein Netzabschlußgerät als zentralen Kommunikationsserver auszugestalten, der eine Anbindung zum äußeren Datennetz über ein schmal- oder breitbandiges Access-System (wie z. B. ISDN, xDSL, Powerline, Glasfaser, usw.) ermöglicht. Im Unterschied zur Einzelanbindung jeder Wohnung bzw. jedes Büros wird eine konzentrierende Anbindung erreicht, was dadurch kostengünstig wird, daß der Multiplexgewinn ausgenutzt werden kann und lediglich eine zentrale Vermittlungsstelle vorhanden ist, welche von allen Teilnehmern gemeinsam verwendet werden kann, ohne daß die Unabhängigkeit der einzelnen Teilnehmer angetastet werden würde. Gerade diese Unabhängigkeit einzelner Unternehmen in einem Haus läßt ein gemeinsames ISDN-System für alle Büros in diesem Haus scheitern, da Absprachen zwischen den Büros erforderlich wären.

Erfindungsgemäß wird ein Netzabschlußgerät für jedes Büro bereitgestellt, derart, daß jedes Büro seine weitere Unabhängigkeit vom anderen Büro hat. Darüberhinaus wird ein zentraler Kommunikationsserver bereitgestellt, der, ohne daß dies für die Büros in irgendeiner Weise einschlägig ist, einen konzentrierenden Zugang bzw. Ausgang zum äußeren Datennetz liefert. Dies wird besonders dann relevanter, wenn andere Telekommunikationsanbieter, welche für Kommunikationsleitungen Miete entrichten müssen, betrachtet werden. Im eingangs beschriebenen Szenario, bei dem für jedes Büro eine eigene Telekommunikationsanlage vorhanden ist, wird für die telekommunikationsmäßige Versorgung des gesamten Hochhauses lediglich noch eine einzige Übertragungsleitung benötigt, so daß auch nur Miete für eine einzige Übertragungsleitung - im Gegensatz zu einer Vielzahl von Übertragungsleitungen - an den entsprechenden Netzbetreiber entrichtet werden muß. Dies führt insbesondere bei größeren Komplexen zu erheblichen Kosteneinsparungen.

An dem erfindungsgemäßen System ist schließlich vorteilhaft, daß von außen beispielsweise für eine zentrale Steuerung mehrerer Häuser über den zentralen Kommunikationsserver in jedem Haus verschiedene Hausfunktionen gesteuert werden können, ohne daß ein Monteur vor Ort sein müßte. Auch dies erfüllt die Flexibilität und ist unter Kostengesichtspunkten vorzuziehen.

Bevorzugte Ausführungsbeispiele der vorliegenden Erfindung werden nachfolgend bezugnehmend auf die beiliegenden Zeichnungen detailliert erläutert. Es zeigen:
- Fig. 1: eine Übersichtsdarstellung des erfindungsgemäßen Kommunikationssystems in einem Haus;
- Fig. 2: eine Prinzipdarstellung des erfindungsgemäßen Kommunikationssystems mit einem zentralen Kommunikations- und Informationsserver mit einem Zugriff (Access) auf ein äußeres Netz;
- Fig. 3: eine detaillierte Darstellung eines intelligenten Netzabschlußgeräts, das eine Schnittstelleneinrichtung für die Zugriffssteuerung und ein Netzabschlußgerät umfaßt;
- Fig. 4: eine Detaildarstellung des intelligenten Netzabschlußgeräts von Fig. 3;
- Fig. 5: eine Übersichtsdarstellung über den zentralen Datenbus im Gesamtsystem;
- Fig. 6: eine Darstellung des Protokollstapels der erfindungsgemäßen Transportplattform, welche den zentralen Datenbus sowie die Schnittstelleneinrichtungen für jedes Netzabschlußgerät umfaßt;
- Fig. 7: eine Prinzipdarstellung des erfindungsgemäßen Kommunikationssystems mit einer Vielzahl von Netzabschlußgeräten, welche über Hubs an dem zentralen Datenbus angeschlossen sind oder an einem Nebenzweig angeschlossen sind, welcher wiederum über einen Hub mit dem zentralen Datenbus verbunden ist;
- Fig. 8: eine Prinzipdarstellung zur Aufteilung des zentralen Datenbusses in zwei Token-Passing-Systeme, welche über ein Gateway (GW) miteinander verbunden sind;
- Fig. 9: eine Prinzipdarstellung einer Verbindung des zentralen Datenbusses, in dem eine Token-Passing-Architektur implementiert ist, mit einem LAN (LAN = Local Area Network = lokales Netz) über ein Gateway, welche in einem Netzabschlußgerät angeordnet ist;
- Fig. 10: eine logische Übersicht über die Verbindung zweier Token-Passing-Systeme über ein LAN;
- Fig. 11: eine alternative Implementation des zentralen Datenbusses unter Verwendung zweier Master/Slave-Netze und einem Gateway;
- Fig. 12: eine Prinzipdarstellung der Verbindung zweier Master/Slave-Netze über ein Gateway, in der die jeweiligen Master-Einheiten integriert sind;
- Fig. 13: eine Darstellung des erfindungsgemäßen Kommunikationssystems anhand des ISO/OSI-Modells.

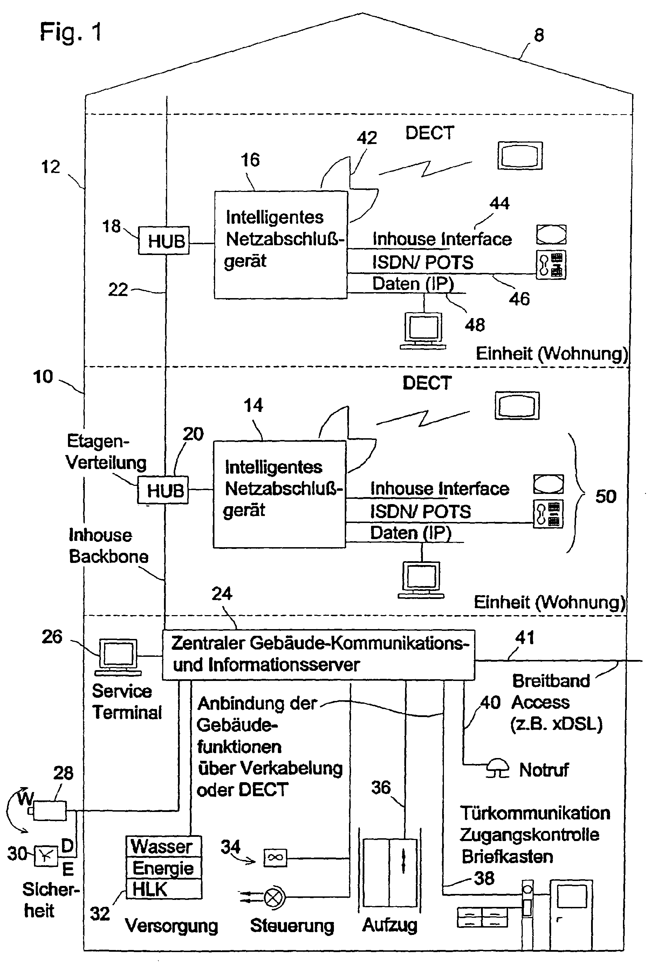

Fig. 1 zeigt eine Übersicht über das erfindungsgemäße Kommunikationssystem für ein Haus, das bei dem in Fig. 1 gezeigten Beispiel aus zwei End-Einheiten, z. B. Wohnungen, 10 und 12 besteht. In der ersten Wohnung befindet sich ein erstes intelligentes Netzabschlußgerät 14. In der zweiten End-Einheit 12 befindet sich ein zweites intelligentes Netzabschlußgerät 16. Die beiden intelligenten Netzabschlußgeräte sind über jeweilige Hubs 18, 20 mit einem zentralen Datenbus 22 verbunden, welcher wiederum mit einem zentralen Gebäude-Kommunikations- und Informationsserver 24 in Verbindung steht.

Bei dem in Fig. 1 gezeigten Ausführungsbeispiel ist der zentrale Gebäude-Kommunikations- und Informationsserver als eigenes Element ausgeführt. Er hat erfindungsgemäß folgende Funktionalitäten.

Zunächst soll eine Realisierung von Vermittlungsdiensten erreicht werden. Der Server kann also die Vermittlung von Telefonaten durchführen. Die Vermittlung kann innerhalb des Kommunikationssystems stattfinden, also von einem Teilnehmer (an einem Gerät angeschlossen) zu einem anderen Teilnehmer (an einem anderen Gerät angeschlossen), oder über den Server nach außen zum öffentlichen Telefonnetz. Die Vermittlungsdienste ähneln der einer Telefonanlage. Vermittelt werden auch Daten, in Form von IP- oder anderen Datenpaketen. Hier wird es auch bevorzugt, daß ein Teilnehmer über den Server mit einem anderen Teilnehmer Daten austauscht. Der Server übernimmt hierbei die Vermittlung, d. h. das Routing, der Daten zu übernehmen.

Weiterhin dient der Server zur Realisierung von Verwaltungsdiensten, d. h. Diensten, die zur Verwaltung eines Gebäudes notwendig sind. Dies kann z. B. die Gebührenerfassung von Telefonaten, Datenverbindungen, die Stromrechnung etc. sein, oder auch die Überwachung von Zugriffen auf Dienste und die Erteilung von Zugriffsrechten.

Weiterhin dient der Server zur Verarbeitung gebäudespezifischer Dienste. Diese Dienste umfassen z. B. Türdienste, Sicherheits- und Überwachungsdienste, HLK oder Aufzugssteuerung.

Darüberhinaus kann der Server auch die Demultiplex/Multiplex-Funktion für den Außenanschluß durchführen. Bei Telefondiensten werden die Telefonanschlüsse aus dem öffentlichen Netz auf die einzelnen Teilnehmer verteilt. Allgemein braucht man weniger Telefonanschlüsse als es Teilnehmer gibt, da es statistisch unwahrscheinlich ist, daß alle Teilnehmer gleichzeitig telefonieren. Je mehr Teilnehmer am Kommunikationssystem angeschlossen sind, desto größer ist der Multiplexgewinn (Anzahl der Teilnehmer insgesamt) /(Anzahl benötigter Telefonleitungen).

Bei der Datenübertragung wird der breitbandige Anschluß, z. B. xDSL oder Glasfaser, auf die einzelnen Teilnehmer nach deren Bedarf verteilt.

Generell gesagt ist der Kommunikations- und Informationsserver ein erweitertes intelligentes Netzabschlußgerät. Er hat gegenüber dem Netzabschlußgerät jedoch die beschriebenen speziellen Aufgaben, wie die Verwaltungsaufgaben oder die breitbandige Anbindung des Kommunikationssystems an das Access-Netz. Der Server arbeitet somit gebäudespezifisch, während das Netzabschlußgerät einheitenspezifisch ausgelegt ist.

Sämtliche Funktionalitäten des Kommunikations- und Informationsservers können jedoch ebenfalls in das erste intelligente Netzabschlußgerät 14 oder in das zweite intelligente Netzabschlußgerät 16 implementiert sein. Aus Zweckmäßigkeitsgründen wird es jedoch bevorzugt, für das Haus 8 einen eigenen zentralen Gebäude-Kommunikations- und Informationsserver bereitzustellen, welcher in einem eigenen Raum des Hauses beispielsweise im Keller untergebracht ist, oder aber in einem Arbeitszimmer einer in dem Haus gegebenenfalls vorhandenen Hausmeisterwohnung. In diesem Raum befindet sich darüberhinaus vorzugsweise ein Service-Terminal 26, über den das erfindungsgemäße Kommunikationssystem gesteuert, verändert, ergänzt oder allgemein gewartet werden kann.

Der zentrale Gebäude-Kommunikations- und Informationsserver 24 ist mit einer Videokamera 28 sowie optional mit weiteren Sensoren 30 zur Überwachung der Sicherheit des Hauses 8 verbunden. Der zentrale Server 24 ist ferner angeordnet, um Versorgungsaufgaben hinsichtlich Wasser, Energie und HLK (HLK = Heizung, Lüftung, Klimatisierung) 32 durchzuführen. Der zentrale Server ist ferner für die Steuerung der Klimaanlage des Hauses sowie weiterer Funktionen, beispielsweise der Steuerung der Jalousien, usw., angeschlossen, welche in Fig. 1 allgemein durch die bei 34 gezeigten Symbole gekennzeichnet sind. Der zentrale Server hat ferner Aufgabe hinsichtlich der Aufzugssteuerung 36, der Türkommunikation, Zugangskontrolle und Briefkastenüberwachung 38 oder der Notruffunktion 40 des Gebäudes, um von jeder Wohnung 10, 12 aus einen Wachdienst alarmieren zu können. Es sei angemerkt, daß die Türkommunikation, Zugangskontrolle und Briefkastenüberwachung entweder verkabelungsmäßig angebunden werden können, oder aber auch drahtlos beispielsweise mittels einer DECT-Funkstrecke (DECT = Digital Enhanced Cordless Telephone) implementierbar sind.

Der zentrale Gebäude-Kommunikations- und Informationsserver 24 liefert ferner einen breitbandigen Zugriff, der beispielsweise mittels xDSL (DSL = Digital Subscriber Line = digitale Teilnehmerleitung; x ist ein Platzhalter für eine bestimmte Technologie bzw. für ein bestimmtes Verfahren, wobei "A" für asymmetrisch und "S" für symmetrisch stehen würde) ausgeführt sein kann, um die Datenübertragungsbandbreite auf üblichen Telephonkabeln zu erhöhen.

Wie es bereits ausgeführt worden ist, ist für jede End-Einheit ein eigenes intelligentes Netzabschlußgerät vorhanden. Dieses enthält ausgangsseitig beispielsweise eine DECT-Schnittstelle 42 für eine drahtlose Telephonanlage oder Datenübertragungsanlage in der End-Einheit 12, ein Inhouse-Interface 44 für die Heizungssteuerung, Jalousiensteuerung, usw. in der entsprechenden End-Einheit 12, eine Schnittstelle 46 für eine in der entsprechenden End-Einheit vorhandene ISDN-Telephonanlage oder POTS-Telephonanlage (POTS = Plain Old Telephone Services = herkömmliche Telephondienste, analoger Telefonanschluß) sowie eine Datenschnittstelle, welche beispielsweise nach dem Internetprotokoll ausgestaltet sein kann, um von der Wohnung 12 aus über das intelligente Netzabschlußgerät 16, den Hub 18, den zentralen Datenbus 22, den zentralen Server 24 und die Breitband-Zugriffsschnittstelle 41 einen Zugriff zum Internet zu erlauben.

Wie es bereits angemerkt worden ist, können sämtliche Funktionalitäten des zentralen Gebäude-Kommunikations- und Informationsservers 24 alternativ in dem intelligenten Netzabschlußgerät 14 integriert sein. Dann würde das erfindungsgemäße Kommunikationssystem lediglich aus den beiden intelligenten Netzabschlußgeräten 14 und 16 bestehen, welche über den zentralen Datenbus 22 miteinander verbunden sind. Wenn das gesamte Kommunikationssystem lediglich zwei intelligente Netzabschlußgeräte aufweist, kann der zentrale Datenbus direkt, ohne Verwendung der Hubs 18, 20 mit dem zentralen Datenbus verbunden sein. Wird jedoch, wie in Fig. 1 gezeigt, ein eigener zentraler Gebäude-Kommunikations- und Informationsserver 24 bereitgestellt, der die in der unteren Hälfte von Fig. 1 gezeigten Funktionalitäten erfüllt, so müssen die intelligenten Netzabschlußgeräte für die Hubs 18, 20 mit dem Server 24 verbunden werden. In diesem Fall kann der zentrale Gebäude-Kommunikations- und Informationsserver ebenfalls je nach Bedarf um die Funktionalitäten der intelligenten Netzabschlußgeräte 14, 16 erweitert werden, so daß ein Kommunikationssystem vorhanden ist, das praktisch drei intelligente Netzabschlußgeräte 14, 16 und 24 aufweist.

Obwohl das in Fig. 1 gezeigte Ausführungsbeispiel der vorliegenden Erfindung auf ein Haus 8 mit zwei Wohnungen 10, 12 bezogen ist, kann das erfindungsgemäße System ohne weiteres auf ein Haus mit ausschließlich Büros oder aber auf ein Haus mit Büros und Wohnungen angewendet werden. Das erfindungsgemäße Kommunikationssystem kann jedoch auch auf eine Wohnung allein angewendet werden, so daß die einzelnen Zimmer End-Einheiten sind, derart, daß für eine Wohnung ein eigenes erfindungsgemäßes Kommunikationssystem vorhanden ist, wobei die intelligenten Netzabschlußgeräte beispielsweise in den einzelnen Zimmern der Wohnung angeordnet sind.

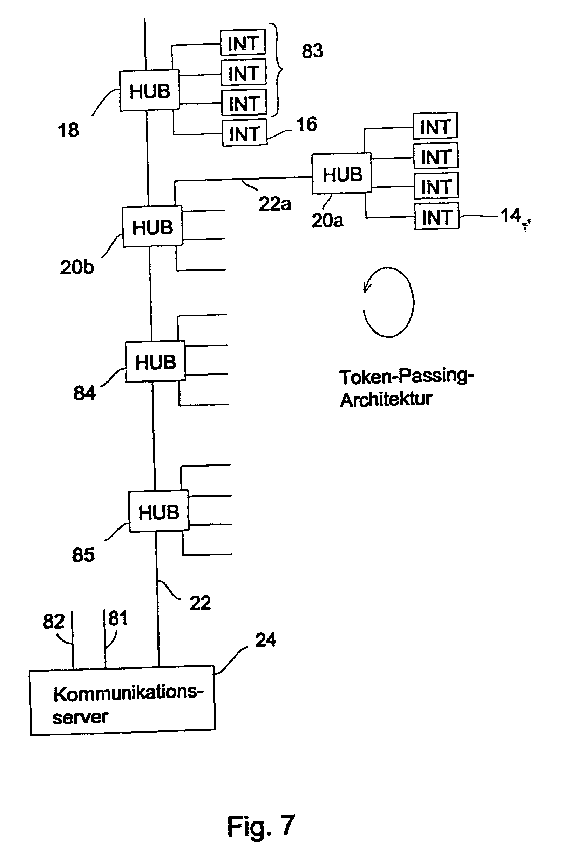

Es wird ferner darauf hingewiesen, daß das erfindungsgemäße Kommunikationssystem nicht darauf begrenzt ist, lediglich in einem Haus angewendet zu werden. Dasselbe kann ebenso in einem irgendwie zusammengehörigen verteilten Gebäudekomplex angewendet werden. Ein solcher zusammengehöriger verteilter Gebäudekomplex könnte beispielsweise ein Campus sein, der aus Universitätsgebäuden und Wohngebäuden besteht. Eine Anwendung des erfindungsgemäßen Kommunikationssystems auf einen solchen zusammengehörigen verteilten Gebäudekomplex ist dann sinnvoll, wenn der Gebäudekomplex beispielsweise gemeinsam verwaltet wird. Auch für Industrieunternehmen, welche mehrere Gebäude umfassen, kann das erfindungsgemäße Kommunikationssystem eingesetzt werden. In diesem Fall wäre ein zentraler Gebäude-Kommunikations- und Informationsserver 24 beispielsweise in der Leitstelle der Gebäudekomplexverwaltung angeordnet. Jedes einzelne Gebäude, d. h. Nordbau, Südbau, Hauptgebäude, usw., hätte dann ein eigenes intelligentes Netzabschlußgerät, das mit dem zentralen Datenbus über einen Hub verbunden ist. Die einzelnen Stockwerke beispielsweise des Nordbaus wären dann, wie es in Fig. 7 angedeutet ist, mit dem intelligenten Netzabschlußgerät des Nordbaus verbunden, so daß eine Netzverzweigung erreicht worden ist, die ein Nordbau-Kommunikationsnetz umfaßt, für das ein intelligentes Netzabschlußgerät des Nordbaus als zentraler Server arbeitet, während dieser zentrale Server wiederum mit dem zentralen Server des gesamten Gebäudekomplexes verbunden ist. Somit kann erfindungsgemäß eine hierarchische Struktur erhalten werden. Alternativ ist es selbstverständlich möglich, unabhängig von den baulichen Gegebenheiten sämtliche intelligenten Netzabschlußgeräte gleich zu berechtigen. Die tatsächliche Implementation wird davon abhängen, ob sehr viel Datenverkehr innerhalb eines Gebäudes stattfindet, oder ob dieser "interne" Datenverkehr im Vergleich zum Datenverkehr über den zentralen Server für den gesamten Gebäudekomplex weniger stark ins Gewicht fällt.

Es wird ferner darauf hingewiesen, daß die einzelnen Teile des verteilten Gebäudekomplexes nicht in unmittelbarer Nähe zueinander angeordnet sein müssen. Sie können auch voneinander entfernt sein, es muß lediglich eine Abzweigung vom zentralen Datenbus zu dem entfernten Teil des Gebäudekomplexes vorhanden sein. Falls die Entfernungen größer werden, müssen, wie es in der Technik bekannt ist, Repeater eingesetzt werden, um in durch die Kabeldämpfung festgelegten Abständen die übertragenen digitalen Signale zu regenerieren. Besonders in solchen Anwendungsfällen mit einer Vielzahl von intelligenten Netzabschlußgeräten zeigt sich die vorteilhafte Seite des erfindungsgemäßen Konzeptes, da es einen sehr hohen Aufwand bedeutet, neue Datenleitungen zwischen voneinander entfernten Gebäuden zu legen, und da preisgünstige Komponenten insbesondere bei großen Mengen, d. h. viel Kabel, viele Repeater und viele Hubs, durchaus zu einem hohen Preis des Gesamtsystems führen können, derart, daß das erfindungsgemäße Kommunikationssystem einen enormen Wettbewerbsvorteil gegenüber Systemlösungen hat, welche mit einer Vielzahl von anwendungsspezifisch ausgeführten parallel arbeitenden Netzen umgehen.

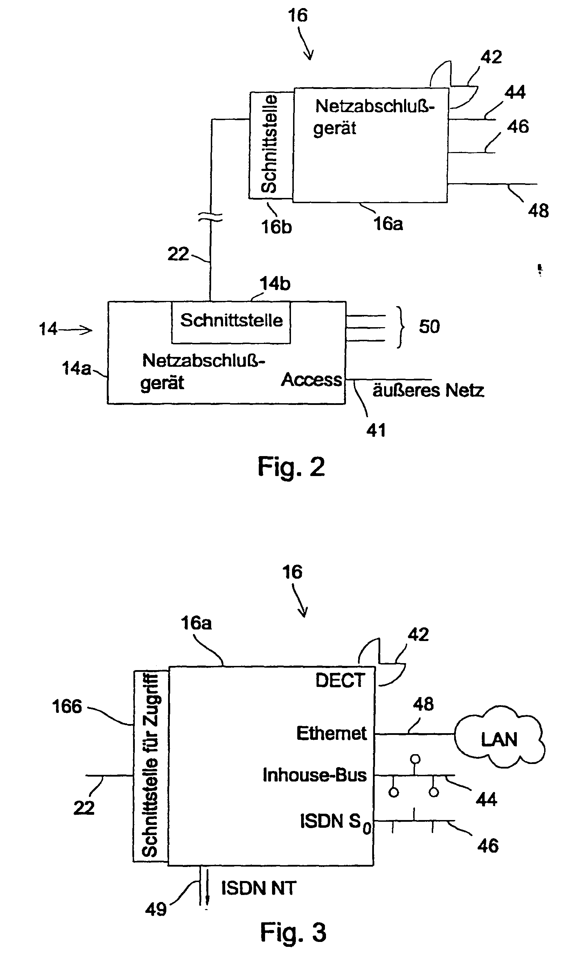

Fig. 2 zeigt eine Prinzipskizze des erfindungsgemäßen Kommunikationsnetzes. Wie es bereits ausgeführt worden ist, umfaßt das erfindungsgemäße Kommunikationsnetz den zentralen Datenbus 22, und das erste intelligente Netzabschlußgerät, das aus einem Netzabschlußgerät 14a sowie einer Schnittstelleneinrichtung 14b besteht. Dasselbe gilt für das zweite Netzabschlußgerät, das ebenfalls aus einem Netzabschlußgerät 16a und einer Schnittstelleneinrichtung 16b besteht. Der zentrale Datenbus ist nicht direkt mit dem Netzabschlußgerät verbunden, sondern über die jeweilige Schnittstelleneinrichtung. Die Schnittstelleneinrichtungen 14b, 16b sind ausgestaltet, um den Zugriff des jeweiligen Netzabschlußgeräts auf den zentralen Datenbus zu steuern, welcher keine deterministische Zugriffssteuerung umfaßt und typischerweise eine begrenzte Übertragungskapazität hat. Die Netzabschlußgeräte umfassen "ausgangsseitig" (wenn der Teil des Netzabschlußgeräts, der mit der zugeordneten Schnittstelle verbunden ist, als Eingang betrachtet wird) verschiedene Schnittstellen, welche für das erste Netzabschlußgerät 16a als 42, 44, 46, 48 bezeichnet sind, welche die in Fig. 1 gezeigten Funktionalitäten darstellen. Das Netzabschlußgerät 14a, 14b umfaßt ebenfalls eine Anzahl von Schnittstellen 50, welche prinzipiell den Schnittstellen 42 bis 48 entsprechen können, wobei bei dem ersten Netzabschlußgerät 14 von Fig. 2 jedoch die Besonderheit vorhanden ist, daß dieses Netzabschlußgerät ebenfalls eine Schnittstelle 41 zum äußeren Netz hat. Das erste Netzabschlußgerät 14 in Fig. 2 ist somit um Funktionalitäten des zentralen Servers 24 von Fig. 1 erweitert und kann dementsprechend auch Anschlüsse 26 bis 40 von Fig. 1 umfassen.

Das zweite Netzabschlußgerät 16 dient somit als Schnittstelle für Kommunikationssysteme innerhalb einer End-Einheit (Wohnung/Zimmer/Büro). Das intelligente Netzabschlußgerät aus Netzabschlußgerät 16a und Schnittstelle 16b faßt somit standardisierte und gebräuchliche Schnittstellen z. B. für DECT, Sprach-, Telekommunikations-Anwendungen, Internet- und Datendienste sowie Inhouse-Bussysteme, wie z. B. EIB (EIB = European Installation Bus = Bustechnologie für die Gebäudeautomatisierung, die in Europa am weitesten verbreitet ist) zusammen und ermöglicht ebenfalls optional ein Interworking zwischen den einzelnen Schnittstellen. Das Netzabschlußgerät selbst kann somit auch als sogenanntes Stand-Alone-Gerät innerhalb einer Einheit, z. B. eines Büros, betrieben werden. Zusätzlich bietet es über die Schnittstelleneinrichtung (z. B. 16b) eine Schnittstelle zum zentralen Datenbus, die das Netzabschlußgerät an das andere Netzabschlußgerät anbindet und den Zugang zur Hauskommunikation bietet.

Der zentrale Datenbus 22, welcher vorzugsweise auf Ethernet basiert, das mittels der Schnittstelleneinrichtungen 14b, 16n zu einem QoS-fähigen Übertragungsprotokoll erweitert ist, kann auf der physikalischen Ebene als ungeschirmte verdrillte Zweidrahtleitung, als geschirmte verdrillte Zweidrahtleitung, als Glasfaserkabel oder als ein anderes Medium ausgeführt sein. Obwohl verschiedene Übertragungsverfahren/Transportprotokolle prinzipiell für die vorliegende Erfindung verwendet werden können, welche für einen zentralen Datenbus geeignet sind, derart, daß sie keine eigene deterministische Zugriffssteuerung, d. h. alle Teilnehmer sind gleichberechtigt und greifen nach Wunsch zu, aufweisen und eine begrenzte Datenkapazität haben, wird Ethernet aufgrund seiner Preisgünstigkeit, Flexibilität, großen Verbreitung und technischen Ausgereiftheit bevorzugt. Daher beziehen sich alle nachfolgenden Ausführungen auf das bevorzugte Ausführungsbeispiel der vorliegenden Erfindung, bei dem der zentrale Datenbus ein Ethernet-Datenbus nach dem Standard IEEE 802.3 ist.

Bei dem in Fig. 2 gezeigten erfindungsgemäßen Kommunikationsnetz ist das erste Netzabschlußgerät 14 als Kommunikations- und Informationsserver erweitert. Somit liefert das erste Netzabschlußgerät 14a das Bindeglied zwischen dem Inhouse-Netz und dem Zugangsnetz (Accessnetz), welches die verschiedenen Datenströme multiplext oder dienstspezifisch verarbeitet. Optional ist auch eine Vermittlung unter Verwendung von PBX-Funktionen (PBX = Private Branch Exchange = private ISDN-Telephonanlage) der verschiedenen Daten möglich. Zugleich wird hier ein Interworking auf Netz- und Applikationsebene zwischen den verschiedenen Netzen/Diensten realisiert. Weiterhin werden Informationen zu verschiedenen Inhouse-Diensten angeboten. In der Grundfunktionalität entspricht das erste Netzabschlußgerät somit dem zweiten Netzabschlußgerät, wobei teilweise noch Serverdienste für das erfindungsgemäße Kommunikationsnetz realisiert werden können, beispielsweise, wenn ein zentrales QoS-Management der Schnittstelleneinrichtungen, Vermittlungsdienste oder Multiplexdienste eingesetzt werden.

Nachfolgend wird detaillierter auf die erste und zweite Schnittstelleneinrichtung (14b, 16b) des ersten bzw. zweiten Netzabschlußgeräts (14a, 16a) eingegangen. Jede dieser Schnittstelleneinrichtungen (14b, 16b) kann im wesentlichen gleich aufgebaut sein und wird auch als QoS-Schicht oder QoS-Layer bezeichnet. Eine solche Schnittstelleneinrichtung übernimmt die Steuerung des Medienzugriffs. Durch diese Übernahme ist gewährleistet, daß die angeschlossene Station nur zu bestimmten, ihr zugewiesenen Zeiten und/oder nur eine begrenzte Menge an Daten senden kann. Durch diese erfindungsgemäße Steuerung des Medienzugriffs ist gewährleistet, daß es zu keinen Kollisionen, d. h., daß zwei oder mehr Stationen gleichzeitig senden, kommen kann, und daß dadurch kein Datenverlust auftreten kann.

Ferner ist es durch diesen deterministischen geregelten Zugriff möglich, den Verkehr des gesamten Netzwerks und der einzelnen Teilnehmer vorauszuberechnen. Da berechnet werden kann, wie lange und wann ein Teilnehmer senden darf, kann den Teilnehmern durch diese Schnittstelleneinrichtung eine definierte Qualität geboten werden. Folgende Qualitätsvereinbarungen werden bevorzugt getroffen:
- Bandbreitenreservierung. Jedem Teilnehmer steht eine minimale definierte Bandbreite zur Verfügung.
- Verzögerungszeiten. Die zur Übertragung anstehenden Daten werden innerhalb einer definierten Zeit gesendet.
- Periodische Übertragung. Die Teilnehmer erhalten in zyklischen Abständen das Recht, eine definierte Datenmenge zu senden. Dies wird beispielsweise bei Sprach- und Videoübertragungen bevorzugt.
- Jitter (Variation der Verzögerung). Die periodische Übertragung wird in gleichmäßigen Abständen durchgeführt. Die maximale zeitliche Abweichung der Abstände wird mit dem maximalen Jitter beschrieben.
- Zugangskontrolle (Admission Control). Es kann im Vorfeld überprüft werden, ob neu angeforderte Qualitätsvereinbarungen eingehalten werden können. Ist dies nicht der Fall, kann diese Vereinbarung nicht angenommen werden, bzw. diese oder eine bereits existierende Vereinbarung muß heruntergestuft werden, um die neue Vereinbarung anzunehmen.

Für jede Verbindung kann eine Qualität vereinbart werden. Die Parameter für eine Verbindung sind unter anderem: minimale Bandbreite, maximale Verzögerung, zeitliche Abstände, maximales Jitter. Es sei darauf hingewiesen, daß für eine Verbindung von den beiden betroffenen Schnittstelleneinrichtungen nicht alle der genannten Parameter sondern lediglich zumindest einer festgelegt werden müssen.

In Fig. 3 ist ein intelligentes Netzabschlußgerät gezeigt, das wieder aus der Schnittstelle 16b für den Zugriff und das Netzabschlußgerät 16a besteht, das in Fig. 3 beispielhaft dargestellte Schnittstellen 42, 44, 46, 48 umfaßt und in Fig. 3 nicht gezeigte optionale Interworking-Einheiten umfaßt, derart, daß ein Verkehr über die DECT-Schnittstelle 42 zum LAN, das mit der Ethernet-Schnittstelle des Netzabschlußgeräts 16a verbunden ist, nicht über den zentralen Datenbus 22 laufen muß, sondern gewissermaßen "regional" in dem Netzabschlußgerät 16a abgewickelt wird. Für sehr preisgünstige Ausführungen kann jedoch auf solche "Interworking"-Einheiten verzichtet werden, derart, daß der Verkehr immer über den zentralen Datenbus 22 läuft.

Es wird jedoch bevorzugt, daß das Netzabschlußgerät 16a auch in Stand-Alone-Modus arbeiten kann, derart, daß ein Interworking und Mapping zwischen DECT, Ethernet, Inhouse-Bus und ISDN möglich ist. Zum anderen wird es darüberhinaus bevorzugt, ebenfalls eine weitere Schnittstelle 49 vorzusehen, welche zum direkten Anschluß an das ISDN-Netz dienen.

Im nachfolgenden wird detaillierter auf die ISDN-Schnittstelle eingegangen, die an einem intelligenten Netzabschlußgerät vorhanden sein kann. Ist das Netzabschlußgerät an dem Kommunikations- und Informationsserver angeschlossen, so wird die ISDN-Verbindung über den QoS-Backbone geleitet, was auch als Tunneling bezeichnet wird. Die ISDN-Schnittstelle im Netzabschlußgerät arbeitet dabei im NT-Modus und speist die Endgeräte. Die ISDN-Schnittstelle im Server arbeitet im TE-Modus und wird an eine Vermittlungseinheit angeschlossen. Die ISDN-VErbindung vom INT wird durchgängig zur Vermittlungseinheit weitergeleitet und auf dem Weg nicht terminiert. Das System arbeitet als sogenannte "S₀-Verlängerung".

Ist das Netzabschlußgerät dagegen nicht mit einem Kommunikations- und Informationsserver verbunden, sondern arbeitet als Stand-Alone-Gerät, verwendet das Netzabschlußgerät die ISDN-Schnittstelle als Zugang zum Telefonnetz. Über diesen Zugang kann telephoniert werden und können Daten übertragen werden.

Ein intelligentes Netzabschlußgerät kann ferner eine EIB/LON-Schnittstelle (LON = Local Operating Network = Lokales Betriebsnetz) aufweisen. Bei einer EIB/LON-Verbindung werden serielle Daten in einer EIB/LON-Interface-Library in EIB/LON-Rohdaten umgesetzt. Eine EIB/LON-Service-Library ermöglicht den Zugriff auf die Interface-Library und zugleich auf einen TCP/IP-Treiber und führt das Interworking zwischen beiden durch. Unterhalb des TCP/IP-Treibers können unterschiedliche Netze liegen, so zum Beispiel die Schnittstelle zum QoS-Backbone, um die EIB/LON-Daten zwischen Server und Netzabschlußgerät zu transportieren, eine DECT-Schnittstelle oder eine Ethernet-Schnittstelle.

Ein EIB-Zugriff gestaltet sich demnach folgendermaßen. Die Daten aus dem EIB-Netz werden über ein EIB-Seriell-Gateway in serielle Daten konvertiert. Nachfolgend werden die seriellen Daten in das Übertragungsnetz eingespeist. Das kann zum Beispiel der QoS-Backbone sein, oder die Datenschnittstelle von DECT oder das herkömmliche Ethernet. Der entsprechende Kommunikationspartner empfängt die Daten und kann sie an ein Modul zur Visualisierung und Steuerung weitergeben (z. B. ein Webpad, Notebook, Organizer). Dieses Modul kann dann Steuerdaten über den gleichen Weg zurück zum EIB-Netz schicken.

Internet-Daten (IP-Daten) können über den QoS-Backbone geleitet werden. Eine weitere Schnittstelle (QoS-Data) ermöglicht den Zugriff auf den QoS-Backbone mit anderen Datenformaten.

Videodaten werden, nachdem sie aus einer Videokarte oder aus einem Netz erhalten worden sind, über den QoS-Backbone getunnelt. Auf der Gegenstelle werden die Daten wieder in die Videokarte bzw. in ein anderes Netzwerk eingespeist.

Bei einer DECT-Schnittstelle eines Netzabschlußgeräts wird eine Konvertierung der DECT-Sprachdaten zu ISDN-Daten vorgenommen. Dann erfolgt die Behandlung genauso wie bei ISDN. Hinsichtlich allgemeiner Daten wird eine Konvertierung ins TCP/IP-Format vorgenommen. Dann werden die Daten wie im IP-Verkehr üblich behandelt.

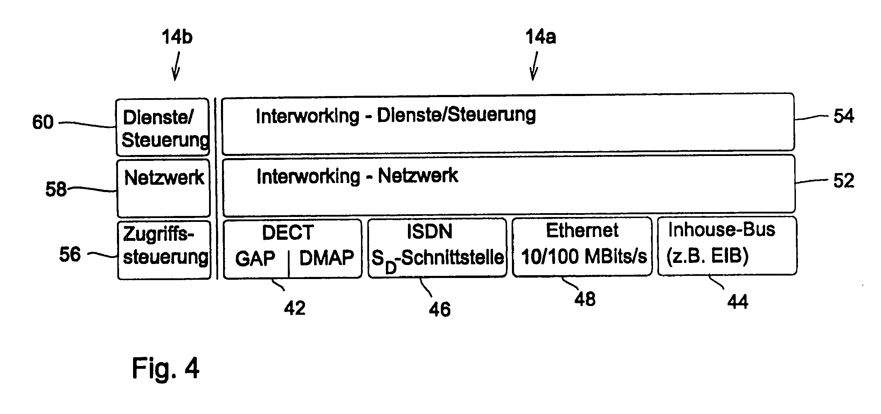

Fig. 4 zeigt eine detaillierter Darstellung der verschiedenen Schichten des Netzabschlußgeräts 14a samt Schnittstelleneinrichtung 14b. Auf der niedersten Ebene befinden sich die Schnittstellen 42, 46, 48 und 44, welche in Fig. 4 noch detaillierter bezeichnet sind. Auf nächster Ebene befindet sich dann ein Interworking-Netzwerk 52, welches einen direkten Verkehr zwischen den einzelnen Schnittstellen 42, 46, 48, 44 ermöglicht. Darüber befindet sich eine mit Interworking-Dienste/Steuerung 54 bezeichnete Schicht.

Die Schnittstelleneinrichtung 14b ist dazu analog aufgebaut und umfaßt als Kernelement die Zugriffssteuerung, die das QoS-Management durchführt und mit 56 bezeichnet ist. Darüber befindet sich auch bei der Schnittstelleneinrichtung 14b eine Netzwerkschicht 58 sowie eine Dienste/Steuerung-Schicht 60.

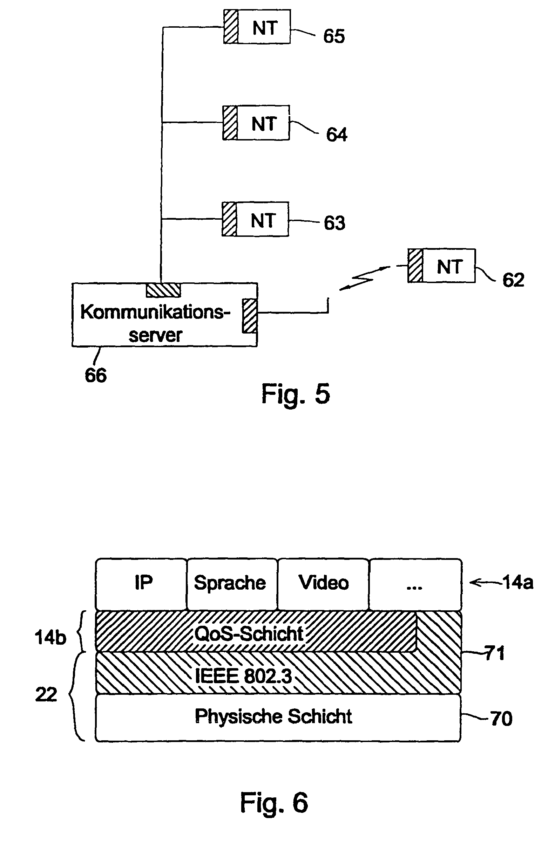

In Fig. 5 ist eine schematische Übersicht des zentralen Datenbusses für ein System aus vier Netzabschlußgeräten 62 bis 65 sowie einem Kommunikationsserver 66 dargestellt. In Fig. 5 ist der Fall gezeigt, bei dem der Kommunikationsserver 66 zwei Kommunikationsnetze bedienen kann, nämlich das erste Kommunikationsnetz, das aus Kommunikationsserver 66 und den Netzabschlußgeräten (NT) 63, 64, 65 besteht, sowie ein weiteres Kommunikationsnetz, das lediglich aus dem Kommunikationsserver 66 und dem Netzabschlußgerät 62 besteht. In Fig. 5 ist ferner gezeigt, daß der zentrale Datenbus nicht unbedingt leitungsgebunden aufgebaut werden muß, sondern auch drahtlos sein kann. Der zentrale Datenbus ist also nicht auf ein spezielles physisches Medium begrenzt. Er könnte somit prizipiell auch auf der Basis des Stromnetzes oder anderen im Haus befindlichen Kabelsystemen implementiert sein.

Fig. 6 zeigt den Protokollstapel der Transportplattform des erfindungsgemäßen Kommunikationsnetzes. Die unterste Schicht, welche in Fig. 6 als physische Schicht 70 bezeichnet ist, stellt das physische Medium des zentralen Datenbusses dar, welches entweder eine drahtgebundene Leitung, eine Funkstrecke oder eine Glasfaserverbindung sein kann.

Darüber befindet sich die Transportprotokollschicht 71, welche bei dem bevorzugten Ausführungsbeispiel der vorliegenden Erfindung als Ethernet-Transportprotokoll gemäß dem Standard IEEE 802.3 ausgeführt ist. Der Zugriff des Netzabschlußgeräts 14a auf die Transportprotokollschicht 71 erfolgt über die QoS-Schicht 14b.

Da mehrere Benutzer auf das Transportsystem Zugriff haben, steuert die QoS-Schicht den Zugriff auf den Zentraldatenbus 22, damit jeder Teilnehmer ausreichend Netzkapazität zur Verfügung hat. Die Anforderungen variieren mit den verwendeten Diensten. Sprachdienste beispielsweise erfordern ein kurzes, möglichst gleichbleibendes Delay und eine garantierte Bandbreite. Hingegen ist für den Datenverkehr (WWW; WWW = World Wide Web = weltweites Netz; FTP; FTP = File Transfer Protocol = Datenübertragungsprotokoll; email = elektronische Post) die Einhaltung eines minimalen Delays weniger wichtig. Hier wünscht sich der Anwender dagegen eine faire oder zugesicherte Zuteilung der Bandbreite.

Die Schnittstelleneinrichtung 14b führt somit eine Bevorzugung von an bestimmten Schnittstellen angeschlossenen Kommunikationsgeräten in der End-Einheit des Hauses gegenüber anderen Kommunikationsgeräten der End-Einheit des Hauses durch. Anschaulich gesprochen ist es für einen Telephondienst nicht hinnehmbar, daß zu große Delays auftreten, da eine gewohnte Telephonkommunikation dann nicht mehr gut möglich ist. Werden beim Telephonieren jedoch Daten bei der Übertragung verloren, so führt das nicht gleich zum Verlust der Kommunikation. Andererseits ist es bei der Datenübertragung beispielsweise einer Datei entscheidend, daß kein Datenverlust auftritt. Dafür ist es weniger wichtig, daß die Datenübertragung sehr schnell stattfindet.

Eine solche Einordnung kann für sämtliche Hausdienste getroffen werden, so daß beispielsweise ein Notruf immer eine sehr hohe Priorität hat, während es für die Jalousiensteuerung oder die Heizungssteuerung irrelevant ist, ob die Daten für diese Systeme ein paar Sekunden früher oder später übertragen werden.

Die Schnittstelleneinrichtung 14b teilt somit den einzelnen Diensten die erforderlichen Systemressourcen zu. Ist bei fest verdrahteten Punkt-zu-Punkt-Verbindungen die Ressourcenzuteilung relativ übersichtlich, so ist diesselbe jedoch für den komplizierteren Fall, daß mehrere verteilte Einheiten auf ein gemeinsames Medium zugreifen, komplex ausgestaltet. Hierzu existieren verschiedene Implementationsmöglichkeiten, wie die QoS-Steuerung für ein solches System implementiert werden kann. Je nach Anwendungsfall kommen Master-Slave-Strukturen, ein verteiltes QoS-Management oder einfache Priorisierungen in Betracht. Die Ansätze unterscheiden sich in ihrer Leistungsfähigkeit, Effizienz, Protokolloverhead, usw.

Verschiedene Gebäudetypen vom Einfamilienhaus über ein mehrstöckiges Wohn/Bürogebäude bis zu einem Gebäudekomplex erfordern unterschiedliche Vernetzungslösungen. Hierbei ist es sinnvoll, daß die Netztopologie und das verwendete Übertragungsmedium an die Anforderungen anpaßbar sind.

Das erfindungsgemäße Kommunikationsnetz muß ferner gegen Zugriff Unbefugter geschützt werden. Aus diesem Grund können optional geeignete kryptographische Verfahren sowohl auf der Ebene der Schnittstelleneinrichtung als auch auf höherer Ebene bis hin zur Applikation eingesetzt werden, um eine Verfälschung von Daten oder ein Abhören von Daten unmöglich zu machen bzw. sehr stark zu erschweren.

Schließlich ist die Verfügbarkeit des Zentraldatenbusses für einige Dienste, wie z. B. Notrufe, sehr wichtig. Es ist also darauf zu achten, daß auch unter Worst-Case-Bedingungen die Funktionalität aufrecht erhalten wird. Andererseits kann jedoch zur Reduzierung des Preises nicht eine unbegrenzte Datenkapazität für den zentralen Bus zur Verfügung gestellt werden.

Nachdem das erfindungsgemäße Kommunikationsnetz aus den separat optimierbaren Komponenten Datenbus ohne eigene Zugriffskontrolle, Netzabschlußgerät und Schnittstelleneinrichtung zum Anpassen des entsprechenden Abschlußgeräts an den Datenbus und zum Steuern des Zugriffs auf den Zentraldatenbus ausgestaltet ist, ist das erfindungsgemäße Kommunikationsnetz optimal für jeden Anwendungsfall skalierbar und anpaßbar, sei es, daß es um die Auswahl des Mediums für den Zentraldatenbus geht, sei es, daß ein Netzabschlußgerät eine Interworking-Fähigkeit hat oder nicht.

Gemäß einem bevorzugten Ausführungsbeispiel der vorliegenden Erfindung wird aufgrund der überlegenen Ausfallsicherheit ein dezentrales Auswahlverfahren (z. B. Token-Passing-Architektur) gegenüber einem zentralen Auswahlverfahren (z. B. Master-Slave-Verfahren) bevorzugt. Beim Token-Passing-Verfahren, das schematisch in Fig. 7 angedeutet ist, läuft anschaulich gesprochen ein Token von einem intelligenten Netzabschlußgerät zum nächsten intelligenten Netzabschlußgerät. Jedes intelligente Netzabschlußgerät kann dann, wenn es im Besitz des Token ist, Daten auf dem zentralen Datenbus übertragen. Die Funktionalität des Token-Empfangs und der Tokenweitergabe wird von der dem entsprechenden Netzabschlußgerät zugeordneten Schnittstelleneinrichtung durchgeführt. Die Schnittstelleneinrichtung legt ferner fest, welche Datenmenge jedes Netzabschlußgerät pro Tokenbesitz übermitteln darf, bzw. ob ein Netzabschlußgerät bei jedem Token-Besitz senden darf, oder vielleicht nur bei z. B. jedem zehnten Token-Besitz.

Das eingesetzte Auswahlverfahren hat den Vorteil, daß es ein deterministisches Verfahren ist, daß eine Bandbreitenreservierung garantiert werden kann, daß maximale Latenzzeiten garantierbar sind, daß es für eine isochrone Übertragung geeignet ist, daß es eine geringe Komplexität hat, und besonders, daß es auswahlsicherer ist, da es dezentral aufgebaut ist.

Nachteile des dezentralen Auswahlverfahrens bestehen in einem Overhead durch die Tokenweitergabe, einem begrenzten aber variablen Delay, daß die Stationen, die nichts zu senden haben, trotzdem ein Token erhalten oder aber vorübergehend aus dem logischen Ring ausscheiden können, was in einem Jitter resultieren kann, daß es besonders für eine isochrone Übertragung geeignet ist und für Burst-Übertragungen schlecht ist, und daß eine aufwendige Tokenverwaltung vorhanden ist, um beispielsweise ein verlorenes Token zu regenerieren.

Zentrale Auswahlverfahren, welche aufgrund ihrer gewissen Ausfallanfälligkeit nicht generell bevorzugt werden, aber bei bestimmten Anwendungen dennoch sinnvoll sein können, können als Master-Slave-Architektur ausgeführt werden. Ähnlich wie bei IEEE 802.11 (PCF; oder 100VG-AnyLAN = 100 Mbit/s LAN over any Voice Grade cable = 100 MBit/s über beliebige Telephonleitungen der Kategorie 3 (CAT3), die ursprünglich für die Sprachübertragung vorgesehen wurden (Voice Grade); ebenfalls bekannt unter dem Standard IEEE 802.12 - Demand Priority Access Method = deterministisches Zugriffsprotokoll für LANs) könnte ein Master die Stationen der Reihe nach ansprechen oder ihnen das Senderecht erteilen. Vorteilhaft am zentralen Auswahlverfahren ist, daß es sich um ein deterministisches Verfahren handelt, das eine Bandbreitenreservierung garantiert werden kann, daß Latenzzeiten garantiert werden können, daß es je nach Ablaufplanungs- (Scheduling-) Algorithmus sehr flexibel ist, und beliebige QoS-Vereinbarungen garantierbar sind.

Nachteilig am zentralen Auswahlverfahren ist, daß durch die Abfrage der Stationen nacheinander ein Overhead vorhanden ist, daß dieses Verfahren je nach Scheduling-Algorithmus sehr komplex werden kann, daß es sehr rechenzeitintensiv ist, wenn bedacht wird, daß einige tausend Abfragen pro Sekunde stattfinden können, daß es ausfallgefährdet ist, und daß bei Überlast oder Ausfall des Schedulers das gesamte Netzwerk blockiert ist.

Im nachfolgenden wird noch einmal auf Fig. 7 Bezug genommen. In Fig. 7 ist zu sehen, daß ein Kommunikationsserver, wie es auch bereits anhand von Fig. 5 dargestellt worden ist, nicht nur Teil eines einzigen Kommunikationsnetzes sein kann, sondern auch Teil eines oder mehrerer weiterer Kommunikationsnetze 81, 82 sein kann. Aus Fig. 7 ist ferner eine weitere mögliche Gestaltung des erfindungsgemäßen Kommunikationsnetzes ersichtlich. So ist in Fig. 7 dargestellt, daß an dem Hub 18, an dem das zweite intelligente Netzabschlußgerät (INT) 16 angeschaltet ist, auch weitere intelligente Netzabschlußgeräte 83 angebracht sein können. Der in Fig. 1 mit 20 bezeichnete Hub teilt sich in Fig. 7 in einen ersten Hub 20b und einen zweiten Hub 20a auf, wobei das intelligente Netzabschlußgerät 14 über diese beiden Hubs 20a, 20b und einen Nebenzweig 22a, welcher ebenfalls Teil des zentralen Datenbusses 22 ist, mit dem Kommunikationsserver 24 über weitere Hubs 84, 85 verbunden ist.

An den in Fig. 7 nicht belegt gezeichneten Anschlüssen der Hubs 20b, 84 und 85 können entweder direkt intelligente Netzabschlußgeräte vorhanden sein, oder aber weitere Nebenzweige angeordnet sein, welche beispielsweise zu anderen Gebäudeteilen eines verteilten Gebäudekomplexes führen.

Das Token-Verfahren als dezentrales Auswahlverfahren liefert einen geregelten Zugriff mit einem Token. Es ist komplett denzentral aufgebaut. Alternativ kann der Token-Umlauf auch von zentraler Stelle, beispielsweise vom Kommunikationsserver, berechnet und gesteuert werden. Es existieren keine Kollisionen. Die Ausdehnung des Netzwerks ist nur durch Dämpfungseigenschaften beschränkt. Bei allzu großen Leitungslängen können entweder Repeater eingesetzt werden, oder aber Hubs, welche an sich keine analogen Verstärker sind, sondern die binären Signale regenerieren. Die Längenbeschränkung des Kabels aufgrund der Dämpfung existiert bei dem in Fig. 7 gezeigten Fall somit lediglich bei Zweigleitungen zwischen zwei Hubs, wie z. B. der Zweigleitung 22a oder der Leitung zwischen dem Hub 18 und dem Hub 20b, etc.

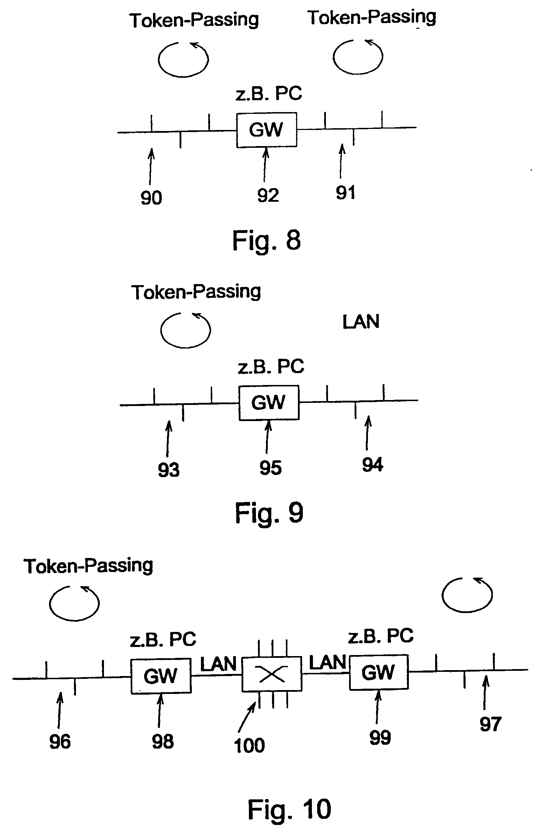

Bezugnehmend auf die Fig. 8 bis 12 wird auf verschiedene Übergänge zwischen zwei Netzen mit unterschiedlicher oder gleicher Netzarchitektur eingegangen. Fig. 8 zeigt schematisch den Übergang von einer Token-Passing-Architektur 90 zu einer anderen Token-Passing-Architektur 91. Token-Passing beschreibt eine Gruppe von Protokollen, die nach einem ähnlichen Verfahren arbeiten. Der Ausdruck "Token-Passing" macht keine Aussagen über die Leistungsfähigkeit eines Verfahrens, sondern weist lediglich auf ein Verfahren hin, bei dem ein Token weitergeleitet wird, um ein Senderecht zu erteilen. Vertreter der Token-Passing-Verfahren sind Token-Bus, Token-Ring, FDDI (Fiber Distributed Data Interface = Zugriffsverfahren für Glasfaserleitungen - Doppelring) oder Rether.

Das Verbindungsglied ist als Gateway 92 bezeichnet. Das Gateway könnte beispielsweise ein Personalcomputer sein. Ein solcher Übergang könnte in einem intelligenten Netzabschlußgerät vorhanden sein, welches zwei Token-Passing-Netze, die in der Wohnung 10 (Fig. 1) angeordnet sind, miteinander verbindet. Ein solcher Übergang könnte jedoch auch, wenn Fig. 10 betrachtet wird, zwischen dem Hub 20b und dem Hub 18 vorhanden sein, um den zentralen Datenbus in zwei Bus-Unterstrukturen aufzuteilen. Dies ist dann vorteilhaft, wenn relativ viel Datenverkehr innerhalb einer Bus-Unterstruktur stattfindet, wenn jedoch relativ wenig Verkehr zwischen den Bus-Unterstrukturen stattfindet. Dann bildet jedes Segment, d. h. das Netz 90 und das Netz 91, eine eigene sogenannte Domain, so daß für einen Verkehr innerhalb der beiden Domains die volle Bandbreite zur Verfügung steht. Ein in Fig. 8 bezeichneter Übergang zwischen zwei Netzen könnte jedoch auch im Kommunikationsserver 24 von Fig. 7 vorhanden sein, um das Kommunikationsnetz 81, das ebenfalls mit dem Kommunikationsserver 24 verbunden ist, mit dem erfindungsgemäßen Kommunikationsnetz zu verbinden, das auf dem zentralen Datenbus 22 aufbaut. Das Gateway 22 kann aus einem Standard-PC bestehen, der mit zwei Netzwerkkarten ausgerüstet ist. Bei nicht zu starkem Verkehrsaufkommen, welches sich in Rechenzeit für das Gateway 92 äußert, kann das Gateway 92 als normale Station am Verkehr teilnehmen. Gefahr besteht jedoch dann, wenn das Gateway 92 ausfällt.

Fig. 9 zeigt einen Übergang zwischen einem Token-Passing-Netz 93 und einem LAN 94. Der Übergang zwischen den Netzen 93 und 94 wird wiederum durch ein Gateway 95 verwaltet, welche ebenfalls als PC ausgestaltet sein kann. Ein solches Gateway 95 wird in jedem intelligenten Netzabschlußgerät vorhanden sein, um ein lokales Netz beispielsweise in einem Büro mit dem zentralen Datenbus 22 zu koppeln, welcher als Token-Bus-System ausgestaltet ist.

Fig. 10 zeigt die Verbindung zweier Token-Passing-Systeme 96, 97 über jeweils ein Gateway 98, 99 mit einem LAN 100. Eine solche Struktur könnte z. B. in dem zentralen Kommunikationsserver 24 von Fig. 7 angeordnet sein, wenn das Kommunikationsnetz 81, 82 ebenfalls als Token-Passing-Netz ausgeführt ist, der Kommunikations-Server 24 jedoch seinerseits an einem LAN teilnimmt.

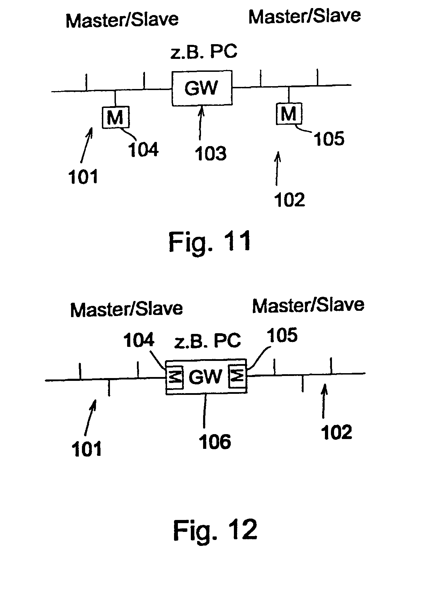

Obwohl, wie es ausgeführt worden ist, für das erfindungsgemäße Haus-Kommunikationssystem ein dezentrales Auswahlverfahren auch bevorzugt wird, um eine höhere Ausfallsicherheit zu gewährleisten, können bei bestimmten Anwendungen auch Master-Slave-Systeme zur Anwendung kommen. Hier teilt ein Master den Netzabschlußgeräten die angeforderten Systemressourcen zu, indem er den einzelnen Netzabschlußgeräten die Rechte zum Senden erteilt. Ein Netzabschlußgerät darf nur dann senden, wenn es gerade vom Master dazu aufgefordert wird. Jedes Segment 101, 102 bildet eine eigene Domain, so daß für jedes Segment die volle Bandbreite zur Verfügung steht. Das Gateway 103 in Fig. 11 arbeitet als Slave und übernimmt nur die Weiterleitung zwischen den Netzsegmenten 101 und 102. Die Master 104, 105 sind unabhängig von dem Gateway in den Netzen 101 bzw. 102 installiert. Das Gateway kann aus einem Standard-PC bestehen, in einem intelligenten Netzabschlußgerät implementiert sein, oder aber ein eigenständiges Gerät sein, wobei zwei Netzwerkinterfaces erforderlich sind. Bei nicht zu starkem Verkehrsaufkommen kann dieses Gateway als normale Station am Master/Slave-Verfahren teilnehmen. Es besteht jedoch die Gefahr der Nicht-Verfügbarkeit eines Netzsegments bzw. des gesamten Verkehrs zwischen 101 und 102, wenn das Gateway 103 ausfällt.

Fig. 12 zeigt ein Gateway 106 zwischen zwei Master/Slave-Systemen 101, 102, wobei jedoch nun die beiden Master-Elemente 104, 105 direkt in das Gateway 106 integriert sein. Hier steht in jedem Teilnetz die volle Bandbreite zur Verfügung.

Im nachfolgenden wird noch einmal auf den Kommunikations- und Informationsserver 24 (Fig. 7, Fig. 1) eingegangen, welcher zur Anbindung des Gesamtsystems an das äußere Access-Netz dient und darüberhinaus zur Anbindung des Netzes an die einzelnen gebäudespezifischen Einheiten zur Gebäudesteuerung und Gebäudeüberwachung vorgesehen ist. Der Server dient als Konzentrator innerhalb des verteilten Systems, von dem aus die zentrale Verwaltung und Steuerung der Hauskommunikation und der Hausdienste erfolgt. Die Dienst- und Managementplattform des Kommunikationsservers dient zur Veranschaulichung und Verwaltung des gebäudespezifischen Dienste und Kommunikations- und Informationssysteme. Die Dienste werden auf dem Kommunikations- und Informationsserver sowie auf den intelligenten Netzabschlußgeräten verteilt implementiert. Die Dienst- und Managementplattform sitzt zur Übertragung auf dem Transportsystem auf. Auf der Ebene der Dienstplattform findet ebenfalls das dienstspezifische Interworking zwischen den verschiedenen Netzwerken statt.

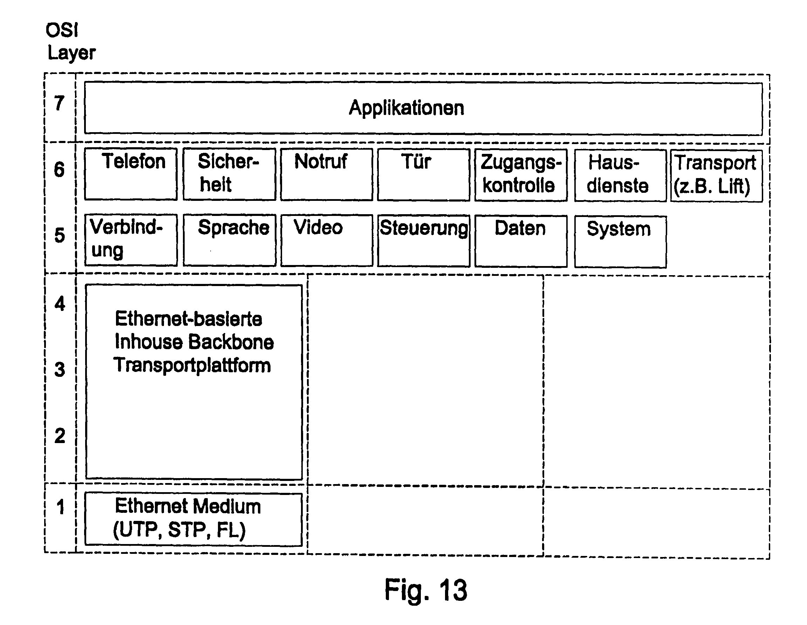

Fig. 13 zeigt eine Übersicht über die Klassifizierung der einzelnen Dienste in einem Protokollstapel anhand des ISOOSI-Modells. In der linken Spalte von Fig. 13 sind die OSI-Schichtennummern von 1 bis 7 numeriert. Die niedrigste Schicht 1 bezieht sich auf das Ethernet-Medium, welches ein UTP (UTP = Unshielded Twisted Pair = nicht geschirmte verdrillte Zweidrahtleitung), eine STP (STP = Shielded Twisted Pair = geschirmte verdrillte Zweidrahtleitung) oder eine FL (FL = Fiber Link = Glasfaserverbindung) oder ein anderes Medium umfassen kann. Die Schichten 2 bis 4 von Fig. 13 betreffen die Inhouse-Datenbus-Transportplattform. Schicht 5 umfaßt Basiskommunikationsdienste. Der Dienst Verbindung betrifft die Übertragung von Verbindungsinformationen. Der Dienst Sprache betrifft die Übertragung von Sprachdaten. Der Dienst Video betrifft die Übertragung von Videodaten. Der Dienst Steuerung betrifft die Übertragung von Steuerungsdaten. Der Dienst Daten betrifft die allgemeine Datenübertragung, beispielsweise WWW oder FTP. Der Dienst System schließlich betrifft die Übertragung von systemeigenen Informationen.

In Schicht 6 sind die erweiterten Inhouse-Dienste aufgeführt. Der Dienst Telephon betrifft die Sprachkommunikation, Telephonie und Videotelephonie. Der Dienst Sicherheit betrifft Sicherheitsfunktionen, beispielsweise eine Alarmanlage. Der Dienst Notruf betrifft einen Notruf oder einen Alarm. Der Dienst Tür betrifft die Türkommunikation. Der Dienst Zugangskontrolle bezieht sich auf die Zugangskontrolle für das Haus bzw. für den verteilten Gebäudekomplex. Der Dienst Hausdienste bezieht sich auf das Facility Management, wie z. B. Wasser, elektrisches Licht, usw. Der Dienst Transport bezieht sich auf Inhouse-Transport-Systeme, wie z. B. Lifte, Rolltreppen, usw.

In der obersten Schicht Nummer 7 befinden sich die einzelnen Applikationen, welche durch die in den End-Einheiten vorhandenen Kommunikationsgeräte bereitgestellt werden.

Zusammenfassend werden noch einmal die Vorteile des erfindungsgemäßen Kommunikationsnetzes sowie der erfindungsgemäßen Einzelkomponenten Transportplattform und intelligentes Netzabschlußgerät genannt:

Der intelligente Network Terminator (NT) integriert verschiedene Kommunikationssysteme (DECT, Ethernet, ISDN, Inhouse-Bussystem) und ermöglicht ein Interworking zwischen verschiedenen Schnittstellen. Der NT arbeitet als zentraler Verteiler innerhalb einer Einheit (z.B. Wohnung oder Zimmer).

Die Ethernet-Transportplattform basiert auf einem standardisierten, flexibel erweiterbaren Inhouse-Breitbandübertragungsverfahren mit Unterstützung von 10-1000 Mbit/s (Shared Medium bzw. Punkt-zu-Punkt) als Inhouse-Backbone. In Sonderfällen können mit relativ einfachen Anpassungen andere Übertragungsverfahren/Protokolle eingesetzt werden (z. B. Powerline, SDSL, Wireless-LAN).

Das Kommunikationssystem ist gleichzeitig eine Transport- und Dienstplattform (diensttransparente bzw. dienstspezifische Übertragung).

Eine Einbeziehung typischer Haus-Dienste (Tür- und Hauskommunikation, Sicherheit, Gebäudesteuerung, Überwachungsdienste, spezialisierte Anwendungen, wie z. B. Rezeptionist (Concierge), ...) ist möglich.

Es liegt ein konzentrierende Anbindung zum Zugangsnetz (Accessnetz) über schmal- und breitbandige Accesssysteme (ISDN, BK, xDSL; Powerline, Fiber, ...) im Unterschied zur Einzelanbindung jedes Teilnehmers/Wohnung vor. Dies ist kostengünstig, da der Multiplexgewinn ausgenützt werden kann.

Das erfindungsgemäße Konzept liefert ferner ein beträchtliches Einsparungspotential bei der Verkabelung, der Verwaltung und auch bei den verwendeten Geräten durch die Mehrfachnutzung. Es ergibt sich eine zusätzliche Kostenersparnis durch den Multiplexgewinn bei Zugang zum Accessnetz (Telekommunikation und Internet), so kann z.B. ein Haus über nur eine verdrillte Zweidrahtleitung (für die an die Deutsche Telekom Miete entrichtet werden muß) breitbandig vernetzt werden.

Ein multimediales Endgerät erlaubt den Zugriff auf die im intelligenten Netzabschlußgerät (NT = Network Terminator) integrierten Schnittstellen und ermöglicht die Kommunikation und Informationsverarbeitung innerhalb eines Gebäudes. Das multifunktionelle Endgerät kann bisherige Endgeräte ersetzen bzw. ergänzen.

Abweichend von den vorstehend beschriebenen bevorzugten Ausführungsbeispielen sei darauf hingewiesen, daß neben Ethernet für den zentralen Datenbus auch alternative Netze, wie z.B. xDSL oder PLC (PLC = Power Line Communications = Kommunikation über die Stromkabel), eingesetzt werden können. Falls ein solches Netz bereits eine eigene Zugriffssteuerung, z. B. eine stochastische Zugriffssteuerung, hat, die unabhängig von der erfindungsgemäßen QoS-Funktion arbeitet, so wird dieses nicht verwendet. Stattdessen wird der Zugriff durch die erfindungsgemäße QoS-Funktion gesteuert.

Weiterhin sei darauf hingewiesen, daß das Ethernet als zentraler Datenbus bevorzugt wird. Sollte jedoch aufgrund von Randbedingungen z. B. in Form der Nutzung einer bereits vorhandenen Infrastruktur ein anderes Netz günstiger sein, so wird es in diesem speziellen Fall bevorzugt zum Einsatz kommen.

## Patentansprüche

1. Kommunikationsnetz für ein Haus (8), eine Wohnung oder ein Büro in einem Haus (8) oder für einen verteilten Gebäudekomplex, um zumindest drei End-Einheiten (10, 12) innerhalb des Hauses, der Wohnung, des Büros oder des verteilten Gebäudekomplexes miteinander zu verbinden, mit folgenden Merkmalen:
einem zentralen Datenbus (22) zum Übertragen von zwischen den zumindest drei End-Einheiten (10, 12) zu übermittelnden Daten;
einem ersten Netzabschlußgerät (14a), das für eine erste Endeinheit (10) vorgesehen ist, und das Schnittstellen (50) für Kommunikationsgeräte umfaßt, die in der ersten End-Einheit (10) angeordnet werden können;
einer ersten Schnittstelleneinrichtung (14b), die dem ersten Netzabschlußgerät zugeordnet ist und zwischen dem zentralen Datenbus (22) und dem ersten Netzabschlußgerät (14a) angeordnet und ausgestaltet ist, um einen Zugriff des ersten Netzabschlußgeräts (14a) auf den zentralen Datenbus zu steuern;
einem zweiten Netzabschlußgerät (16a), das für eine zweite End-Einheit (12) vorgesehen ist, und das Schnittstellen (42, 44, 46 48) für Kommunikationsgeräte umfaßt, die in der zweiten End-Einheit (12) angeordnet werden können;
einer zweiten Schnittstelleneinrichtung (16b), die dem zweiten Netzabschlußgerät zugeordnet ist und zwischen dem zentralen Datenbus (22) und dem zweiten Netzabschlußgerät (16a) angeordnet und ausgestaltet ist, um einen Zugriff des zweiten Netzabschlußgeräts (16a) auf den zentralen Datenbus (22) zu steuern;
einem dritten Netzabschlußgerät (65), das für eine dritte End-Einheit vorgesehen ist, und das Schnittstellen für Kommunikationsgeräte umfaßt, die in der dritten Endeinheit angeordnet werden können;
einer dritten Schnittstelleneinrichtung, die dem dritten Netzabschlußgerät zugeordnet ist und zwischen dem zentralen Datenbus (22) und dem dritten Netzabschlußgerät angeordnet und ausgestaltet ist, um einen Zugriff des dritten Netzabschlußgeräts auf den zentralen Datenbus (22) zu steuern,
wobei der zentrale Datenbus ein gemeinsam benutzter Übertragungsweg ist, auf den durch das erste, zweite oder dritte Netzabschlußgerät ohne Rücksicht auf jeweils andere Netzabschlußgeräte zugegriffen werden kann,
wobei die erste, die zweite und die dritte Schnittstelleneinrichtung (14b, 16b) angeordnet sind, um den Zugriff des ersten, zweiten und dritten Netzabschlußgeräts auf den zentralen Datenbus so zu steuern, daß für eine Kommunikation zwischen dem ersten, dem zweiten und dem dritten Netzabschlußgerät über den zentralen Datenbus garantierte Übertragungsparameter gewährleistet sind, und
wobei jedes Netzabschlußgerät oder jedes mit dem Netzabschlußgerät verbundene Kommunikationsgerät angeordnet ist, um mit der demselben zugeordneten Schnittstelleneinrichtung (14b, 16b) Übertragungsparameter für eine Übertragung über den zentralen Datenbus zum Erreichen einer adaptiven Dienstgüte selbst zu vereinbaren.

2. Kommunikationsnetz nach Anspruch 1, bei dem der zentrale Datenbus (22) ein Ethernet-Netz nach dem Standard IEEE 802.3, ein PLC-Netz, ein xDSL-Netz, ein Breitbandkabelnetz oder ein Breitbandfunknetz ist.

3. Kommunikationsnetz nach Anspruch 1 oder 2, bei dem die Schnittstellen (42, 44, 46, 48, 50) des ersten, des zweiten oder des dritten Netzabschlußgeräts (14a, 16a) eine Schnittstelle umfaßt, die aus der folgenden Gruppe von Schnittstellen ausgewählt ist: eine Schnittstelle für ein breitbandiges Funksystem zum Übertragen von Sprache und/oder Daten, für ein Ethernet-System, für ein ISDN-System, für ein POTS-System, für ein Sensor/Aktor-System für eine Haussteuerung, für ein Sensor/Aktor-System für ein Hausüberwachungssystem, für ein PLC-System, für ein System zur Türkommunikation und für ein EIB-System.

4. Kommunikationsnetz nach einem der vorhergehenden Ansprüche, bei dem das erste Netzabschlußgerät (14a) als zentraler Informations- und Kommunikations-Server (24) ausgebildet ist und ferner eine Schnittstelle (41) für ein äußeres Kommunikationssystem umfaßt, um eine Sprach- und Datenkommunikationsverbindung zwischen dem mit den Netzabschlußgeräten (14a, 16a) verbundenen Kommunikationsgeräten und einem Teilnehmer des äußeren Kommunikationssystems zu gestatten.

5. Kommunikationsnetz nach Anspruch 4, bei dem die Schnittstelle (41) für das äußere Kommunikationssystem eine ISDN-Schnittstelle, eine Breitband-xDSL-Schnittstelle, eine Schnittstelle für ein terrestrisches Breitband-Funk-System, ein Satellitenfunksystem, ein Glasfaserkabel, ein externes PLC-Netz oder ein Breitband-Kupferkabel ist.

6. Kommunikationsnetz nach einem der vorhergehenden Ansprüche, bei dem der Datenbus durch eine nicht geschirmte verdrillte Zweidrahtleitung, durch eine geschirmte verdrillte Zweidrahtleitung, durch ein Glasfaserkabel oder durch eine Funkstrecke ausgeführt ist.

7. Kommunikationsnetz nach einem der vorhergehenden Ansprüche, bei dem zumindest ein Netzabschlußgerät (14a, 16a) angeordnet ist, um eine Kommunikation zwischen den an den Schnittstellen desselben angeschlossenen Kommunikationsgeräten zu ermöglichen, ohne daß Daten bezüglich dieser Kommunikation über den zentralen Datenbus breitbandig übertragen werden.

8. Kommunikationsnetz nach einem der vorhergehenden Ansprüche, bei dem der zentrale Datenbus (22) ferner folgende Merkmale aufweist:
einen Stammabschnitt, der mit dem ersten Netzabschlußgerät verbunden ist;
einen Hub (85, 84, 20b) für jedes Netzabschlußgerät, wobei die Hubs in dem Stammabschnitt angeordnet sind; und
einen Nebenabschnitt (22a) für jedes Netzabschlußgerät, wobei jedes Netzabschlußgerät über den für dasselbe vorgesehenen Nebenabschnitt und den entsprechenden Hub mit dem ersten Netzabschlußgerät kommunizieren kann.

9. Kommunikationsnetz nach Anspruch 1, bei dem die Schnittstelleneinrichtungen ausgestaltet sind, um als Übertragungsparameter zum Erreichen einer adaptiven Dienstgüte zumindest einen Parameter aus der Gruppe von Parametern, die Bandbreitenreservierung, Verzögerungszeit, Periodische Übertragung, Jitter und Zugangssteuerung umfaßt, festzulegen.

10. Kommunikationsnetz nach Anspruch 1 oder Anspruch 9, bei dem die erste, die zweite und die dritte Schnittstelleneinrichtung angeordnet sind, um ein zentrales oder dezentrales Auswahlverfahren zu implementieren, um den Zugriff auf den Datenbus zu steuern.

11. Kommunikationsnetz nach Anspruch 10, bei dem die Schnittstelleneinrichtungen (14b, 16b) angeordnet sind, um ein Token-Passing-Verfahren oder ein Master/Slave-Verfahren zu implementieren.

12. Kommunikationsnetz nach einem der vorhergehenden Ansprüche, bei dem der zentrale Datenbus hinsichtlich seiner Datenübertragungskapazität auf eine geforderte Datenkapazität skalierbar ist.

## Claims

1. Communication network for a house (8), a flat or an office in a house (8) or for separated blocks of buildings so as to connect at least three terminal units (10, 12) within the house, the flat, the office or the separated blocks of buildings, comprising:
a central data bus (22) for transmitting data to be transmitted between said at least three terminal units (10, 12);
a first network terminating device (14a) which is provided for a first terminal unit (10) and which comprises interfaces (50) for communication devices which may be disposed in the first terminal unit (10);
a first interface means (14b) which is allocated to said first network terminating device and which is disposed between the central data bus (22) and the first network terminating device (14a) and which is designed for controlling an access of the first network terminating device (14a) to the central data bus;
a second network terminating device (16a) which is provided for a second terminal unit (12) and which comprises interfaces (42, 44, 46, 48) for communication devices which may be disposed in the second terminal unit (12);
a second interface means (16b) which is allocated to the second network terminating device and which is disposed between the central data bus (22) and the second network terminating device (16a) and which is designed for controlling an access of the second network terminating device (16a) to the central data bus (22);
a third network terminating device (65) which is provided for a third terminal unit and which comprises interfaces for communication devices which may be disposed in the third terminal unit;
a third interface means which is allocated to the third network terminating device and which is disposed between the central data bus (22) and the third network terminating device and which is designed for controlling an access of the third network terminating device to the central data bus (22),
wherein the central data bus is a jointly utilised transmission path which may be accessed by the first, second or third network terminating device without considering other network terminating devices,
wherein said first, second and third interface means (14b, 16b) are disposed for controlling said access of the first, second and third network terminating devices to the central data bus such that guaranteed transmission parameters are guaranteed for a communication between the first, second and third network terminating devices via the central data bus, and
wherein each network terminating device or each communication device connected to the network terminating device is disposed so as to arrange, together with the interface means (14b, 16b) which has been allocated to the same, transmission parameters for a transmission via the central data bus for achieving an adaptive service quality.

2. Communication network according to claim 1, wherein the central data bus (22) is an Ethernet network as per standard IEEE 802.3, a PLC network, an xDSL network, a broad-band cable network or a broad-band radio network.

3. Communication network according to claim 1 or 2, wherein the interfaces (42, 44, 46, 48, 50) of said first, second or third network terminating device (14a, 16a) comprise an interface selected from the following group of interfaces: an interface for a broad-band radio system for transmitting voice and/or data, an interface for an Ethernet system, an interface for an ISDN system, an interface for a POTS system, an interface for a sensor/actor system for a house control, an interface for a sensor/actor system for a house monitoring system, an interface for a PLC system, an interface for a system for door communication and an interface for an EIB system.

4. Communication network according to one of the preceding claims, wherein said first network terminating device (14a) is formed as a central information and communication server (24) and further includes an interface (41) for an external communication system so as to permit a voice and data communication connection between the communication devices connected to the network terminating devices (14a, 16a) and a subscriber of the external communication system.

5. Communication network according to claim 4, wherein the interface (41) for the external communication system is an ISDN interface, a broad-band xDSL interface, an interface for a terrestrial broad-band radio system, a satellite radio system, an optical fibre cable, an external PLC network or a broad-band copper cable.

6. Communication network according to one of the preceding claims, wherein the data bus is embodied by a non-shielded twisted two-wire line, by a shielded twisted two-wire line, by an optical fibre cable or by a radio path.

7. Communication network according to one of the preceding claims, wherein at least one network terminating device (14a, 16a) is disposed so as to enable a communication between the communication devices connected at the interfaces of the same without transmitting data concerning this communication via the central data bus on a broad-band basis.

8. Communication network according to one of the preceding claims, wherein the central data bus (22) further comprises:
a trunk section connected to the first network terminating device;
a hub (85, 84, 20b) for each network terminating device with the hubs being disposed in the trunk section; and
a secondary section (22a) for each network terminating device, with each network terminating device being able to communicate with the first network terminating device via the secondary section provided for the same and the corresponding hub.

9. Communication network according to claim 1, wherein the interface means are designed to establish at least one parameter from the group of parameters, which comprises band-width reservation, delay time, periodic transmission, jitter and access control, as a transmission parameter for achieving an adaptive service quality.

10. Communication network according to claim 1 or 9, wherein said first, second and third interface means are disposed so as to implement a centralised or a decentralised selection procedure for controlling said access to the data bus.

11. Communication network according to claim 10, wherein the interface means (14b, 16b) are disposed so as to implement a token-passing procedure or a master/slave procedure.

12. Communication network according to one of the preceding claims, wherein the central data bus with respect to its data transmission capacity is scalable to a required data capacity.

## Revendications

1. Réseau de communication pour une maison (8), un appartement ou un bureau dans une maison (8) ou pour un immeuble partagé, pour relier entre eux au moins trois terminaux (10, 12) dans la maison, l'appartement, le bureau ou l'immeuble partagé, aux caractéristiques suivantes:
un bus de données central (22) destiné à transmettre des données à communiquer entre les au moins trois terminaux (10, 12);
un premier appareil de terminaison de réseau (14a) qui est prévu pour un premier terminal (10) et qui comporte des interfaces (50) pour des appareils de communication pouvant être disposés dans le premier terminal (10);
un premier moyen d'interface (14b) associé au premier appareil de terminaison de réseau et disposé et réalisé entre le bus de données central (22) et le premier appareil de terminaison de réseau (14a), pour commander un accès du premier appareil de terminaison de réseau (14a) au bus de données central;
un deuxième appareil de terminaison de réseau (16a) qui est prévu pour un deuxième terminal (12), et qui comporte des interfaces (42, 44, 46 48) pour des appareils de communication pouvant être disposés dans le deuxième terminal (12);
un deuxième moyen d'interface (16b) associé au deuxième appareil de terminaison de réseau et disposé et réalisé entre le bus de données central (22) et le deuxième appareil de terminaison de réseau (16a), pour commander un accès du deuxième appareil de terminaison de réseau (16a) au bus de données central (22);
un troisième appareil de terminaison de réseau (65) qui est prévu pour un troisième terminal, et qui comporte des interfaces pour des appareils de communication pouvant être disposés dans le troisième terminal;
un troisième moyen d'interface associé au troisième appareil de terminaison de réseau et réalisé entre le bus de données central (22) et le troisième appareil de terminaison de réseau, pour commander un accès du troisième appareil de terminaison de réseau au bus de données central (22),
le bus de données central étant un trajet de transmission utilisé en commun auquel peut être accédé par le premier, le deuxième ou le troisième appareil de terminaison de réseau sans tenir compte d'autres appareils de terminaison de réseau respectifs,
le premier, le deuxième et le troisième moyen d'interface (14b, 16b) étant disposés pour commander l'accès du premier, du deuxième et du troisième appareil de terminaison de réseau au bus de données central de sorte que soient garantis, pour une communication entre le premier, le deuxième et le troisième appareil de terminaison de réseau par l'intermédiaire du bus de données central des paramètres de transmission garantis, et
chaque appareil de terminaison de réseau ou chaque appareil de communication relié à l'appareil de terminaison de réseau étant disposé de manière à convenir lui-même avec le moyen d'interface (14b, 16b) associé à ce dernier des paramètres de transmission pour une transmission par l'intermédiaire du bus de données central pour obtenir une qualité de service adaptative.

2. Réseau de communication selon la revendication 1, dans lequel le bus de données central (22) est un réseau Ethernet selon la norme IEEE 802.3, un réseau PLC, un réseau xDSL, un réseau câblé à large bande ou un réseau de radiocommunication à large bande.

3. Réseau de communication selon la revendication 1 ou 2, dans lequel les interfaces (42, 44, 46, 48, 50) du premier, du deuxième ou du troisième appareil de terminaison de réseau (14a, 16a) comportent une interface qui est choisie parmi le groupe d'interfaces suivant: une interface pour un système de radiocommunication à large bande pour la transmission de voix et/ou de données, pour un système Ethernet, pour un système ISDN, pour un système POTS, pour un système à capteur/actionneur pour une commande domotique, pour un système à capteur/actionneur pour un système de surveillance de maison, pour un système PLC, pour un système de communication de porte et pour un système EIB.

4. Réseau de communication selon l'une des revendications précédentes, dans lequel le premier appareil de terminaison de réseau (14a) est réalisé sous forme de serveur d'information et de communication central (24) et comporte, par ailleurs, une interface (41) pour un système de communication extérieur, pour permettre une liaison de communication de voix et de données entre les appareils de communication reliés aux appareils de terminaison de réseau (14a, 16a) et un abonné du système de communication extérieur.

5. Réseau de communication selon la revendication 4, dans lequel l'interface (41) pour le système de communication extérieur est une interface ISDN, une interface xDSL à large bande, une interface pour un système de radiocommunication à large bande terrestre, un système de radiocommunication par satellite, un câble à fibre de verre, un réseau PLC externe ou un câble de cuivre à large bande.

6. Réseau de communication selon l'une des revendications précédentes, dans lequel le bus de données est réalisé par une ligne bifilaire torsionnée non blindée, par une ligne bifilaire torsionnée blindée, par un câble à fibre de verre ou par un trajet de radiocommunication.

7. Réseau de communication selon l'une des revendications précédentes, dans lequel au moins un appareil de terminaison de réseau (14a, 16a) est disposé de manière à permettre une communication entre les appareils de communication raccordés aux interfaces de ce dernier, sans que des données relatives à cette communication ne soient transmises à large bande par l'intermédiaire du bus de données central.

8. Réseau de communication selon l'une des revendications précédentes, dans lequel le bus de données central (22) présente les caractéristiques suivantes:
un segment principal qui est relié au premier appareil de terminaison de réseau;
un noeud de communication (85, 84, 20b) pour chaque appareil de terminaison de réseau, les noeuds de communication étant disposés dans le segment principal; et
un segment auxiliaire (22a) pour chaque appareil de terminaison de réseau, chaque appareil de terminaison de réseau pouvant communiquer, par l'intermédiaire du segment auxiliaire prévu pour ce dernier et le noeud de communication correspondant, avec le premier appareil de terminaison de réseau.

9. Réseau de communication selon la revendication 1, dans lequel les moyens d'interface sont réalisés de manière à fixer comme paramètre de transmission, pour obtenir une qualité de service adaptative, au moins un paramètre du groupe de paramètres comprenant la réservation de largeur de bande, le temps de temporisation, la transmission périodique, la gigue et la commande d'accès.

10. Réseau de communication selon la revendication 1 ou la revendication 9, dans lequel le premier, le deuxième et le troisième moyen d'interface sont disposés de manière à mettre en oeuvre un procédé de sélection central ou décentralisé pour commander l'accès à bus de données.

11. Réseau de communication selon la revendication 10, dans lequel les moyens d'interface (14b, 16b) sont disposés de manière à mettre en oeuvre un procédé à 'token passing' (= passage de jeton) ou un procédé à principal/esclave.

12. Réseau de communication selon l'une des revendications précédentes, dans lequel le bus de données central est modulable, quant à sa capacité de transmission de données, à une capacité de données requise.
